# EUROPEAN PATENT APPLICATION

(11) **EP 3 160 150 A1**
(43) Date of publication of application: **26.04.2017**
(21) Application number: 16195089.4
(22) Date of filing: 21.10.2016
(51) Int. Cl.: H04N 21/422, G06F 3/01, G06F 3/03, G10L 15/26

(54) **ELECTRONIC DEVICE AND METHOD FOR EXECUTING FUNCTION USING SPEECH RECOGNITION THEREOF**

(30) Priority: 22.10.2015 KR 20150147226
(71) Applicant: Samsung Electronics Co., Ltd., Gyeonggi-do 16677 (KR)
(72) Inventor: KANG, Sangki, 16677 Gyeonggi-do (KR); BAEK, Sunghwan, 16677 Gyeonggi-do (KR); LEE, Jimin, 16677 Gyeonggi-do (KR); KIM, Kyungtae, 16677 Gyeonggi-do (KR); JEON, Yongjoon, 16677 Gyeonggi-do (KR); KANG, Doosuk, 16677 Gyeonggi-do (KR)
(74) Representative: HGF Limited

(57) **Abstract**

An electronic device and a method for using speech recognition are provided. The electronic device includes an input device, a touch screen display, a processor, and a memory. The memory stores a first software program that can be triggered in response to a first user input, and instructions which when executed by the processor, configures the processor to control for receiving a second user input that is different from the first user input through the input device and a selected region on the display, switching the electronic device to a state where the electronic device can receive a speech through the microphone in response to the second user input, receiving the speech from an external source through the microphone in the state, and executing the first software program using at least a part of the received speech without receiving the first user input.

## Description

### TECHNICAL FIELD

The present disclosure relates to an electronic device and a method for easily executing a function of the electronic device using speech recognition.

### BACKGROUND

With the striking development of information and communication technology and semiconductor technology, the spread and the use of electronic devices have been increased at high speed. Further, the latest electronic devices achieve convergence with various terminals without staying in their traditional and peculiar regions. For example, mobile communication terminals provide various functions, such as a television (TV) viewing function (e.g., mobile broadcasting such as digital multimedia broadcasting (DMB) or digital video broadcasting (DVB)), a music reproduction function (e.g., Moving Picture Experts Group (MPEG) audio layer-3 (MP3)), an internet connection function, and a radio receiving function, in addition to a general communication function, such as voice call or message transmission/reception.

On the other hand, speech recognition technology has recently been developed to be implemented in various electronic devices having a speech input device (e.g., microphone). Recently, such speech recognition technology has replaced physical inputs in the electronic devices, and has been used to vocally control the electronic devices.

The above information is presented as background information only to assist with an understanding of the present disclosure. No determination has been made, and no assertion is made, as to whether any of the above might be applicable as prior art with regard to the present disclosure.

### SUMMARY

However, in order to control an electronic device through a speech input, it is required for a user to successively perform multiple processes, that is, to activate the electronic device, to activate a speech recognition function, and then to input speech information. Accordingly, the user may feel inconvenience in controlling the electronic device through the speech input. Particularly, in the case where the electronic device is set to be locked for security, it is additionally required for the user to release the locking state before vocally controlling the electronic device. This may cause utility of the speech recognition function to deteriorate.

Accordingly, there has recently been a need for schemes to easily execute various functions provided by the electronic device through the speech input.

Aspects of the present disclosure are to address at least the above-mentioned problems and/or disadvantages and to provide at least the advantages described below. Accordingly, an aspect of the present disclosure is to provide an electronic device and a method for executing a function using speech recognition, which can perform a speech command for a specific domain (function) more easily through activation of a speech recognition function in accordance with various user input.

In accordance with an aspect of the present disclosure, an electronic device is provided. The electronic device includes a housing having a first surface and a second surface that is directed toward an opposite direction to the first surface, a microphone arranged to receive sound from an external source, at least one input device arranged on the housing, a touch screen display arranged on the first surface of the housing, a processor electrically connected to the microphone, the input device, and the display, and a memory electrically connected to the processor, wherein the memory stores a first software program that can be triggered in response to a first user input, and the memory stores instructions which, when executed by the processor, configures the processor to control for receiving a second user input that is different from the first user input through at least one of the at least one input device and a selected region on the display, switching the electronic device to a state in which the electronic device can receive a speech through the microphone in response to the second user input, receiving the speech from an external source through the microphone, and executing the first software program using at least a part of the received speech without receiving the first user input.

In accordance with another aspect of the present disclosure, an electronic device is provided. The electronic device includes a housing, a microphone arranged to receive sound from an outside, at least one user interface arranged on an outer surface of the housing, a processor electrically connected to the microphone and the user interface, and a memory electrically connected to the processor, and configured to store a first software program that can be triggered in response to a first user input, wherein the memory stores instructions which, when executed by a processor, configures the processor to control for receiving a second user input that is different from the first user input through the at least one user interface, switching the electronic device to a state in which the electronic device can receive a speech through the microphone in response to the second user input, receiving the speech from the external source through the microphone, and executing the first software program using at least a part of the received speech without receiving the first user input.

In accordance with another aspect of the present disclosure, a method for executing a function using speech recognition of an electronic device is provided. The method includes receiving a user input, switching the electronic device to a state in which the electronic device can receive a speech through a microphone if the received user input satisfies a speech recognition activation condition, receiving speech information from an external source through the microphone, confirming a specific function execution domain based on the user input, and processing a speech command using the received speech information through limitation to the confirmed function execution domain.

In accordance with another aspect of the present disclosure, a method for executing a function using speech recognition of an electronic device including a housing having a first surface and a second surface that is directed toward an opposite direction to the first surface, a microphone arranged to receive sound from an external source, at least one input device arranged on the housing, a touch screen display arranged on the first surface of the housing, a processor electrically connected to the microphone, the input device, and the display, and a memory electrically connected to the processor to store a first software program that can be triggered in response to a first user input is provided. The method includes receiving, by the electronic device, a second user input that is different from the first user input through at least one of the at least one input device and a selected region of the display, switching the electronic device to a state in which the electronic device can receive a speech through the microphone in response to the second user input, receiving, by the electronic device, the speech from the external source through the microphone, and executing, by the electronic device, the first software program using at least a part of the received speech without receiving the first user input.

According to various embodiments of the present disclosure, the electronic device can easily and rapidly execute a specific function through the speech input by executing the speech recognition function based on the input device provided in the electronic device and processing the input speech in relation to the specific domain (function). Accordingly, the electronic device can improve efficiency of the speech recognition by easily activating the speech recognition function even without multiple user inputs and processing the input speech through the speech command limited to the predetermined specific application.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a diagram illustrating a network configuration of an electronic device according to various embodiments of the present disclosure;
FIG. 2 is a diagram illustrating a configuration of a processor of an electronic device according to various embodiments of the present disclosure;
FIG. 3 is a flowchart illustrating a method for executing a function using speech recognition of an electronic device according to various embodiments of the present disclosure;
FIG. 4 is a diagram illustrating the configuration of a processor of an electronic device according to various embodiments of the present disclosure;
FIG. 5 is a flowchart illustrating a method for executing a function using speech recognition of an electronic device according to various embodiments of the present disclosure;
FIG. 6 is a flowchart illustrating a method for controlling a screen of an electronic device according to various embodiments of the present disclosure;
FIG. 7 is a diagram explaining a method for controlling a screen of an electronic device according to various embodiments of the present disclosure;
FIGS. 8A, 8B, 8C, and 8D are diagrams explaining various user input methods for triggering speech recognition according to various embodiments of the present disclosure;
FIG. 9 is a flowchart illustrating a method for executing a function using speech recognition of an electronic device according to various embodiments of the present disclosure;
FIG. 10 is a flowchart illustrating a method for determining a domain in accordance with a key input time according to various embodiments of the present disclosure;
FIG. 11 is a diagram of a screen explaining a method for determining a domain in accordance with a key input time according to various embodiments of the present disclosure;
FIG. 12 is a diagram of a screen explaining a method for triggering speech recognition using icons according to various embodiments of the present disclosure;
FIG. 13 is a diagram of a screen for reporting speech recognition failure according to various embodiments of the present disclosure;
FIG. 14 is a diagram explaining a method for executing a function using speech recognition of an electronic device when locking is set according to various embodiments of the present disclosure;
FIG. 15 is a block diagram of a program module according to various embodiments of the present disclosure; and
FIG. 16 is a block diagram of an electronic device according to various embodiments of the present disclosure.

The same reference numerals are used to represent the same elements throughout the drawings.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

An expression "comprising" or "may comprise" used in the present disclosure indicates presence of a corresponding function, operation, or element and does not limit additional at least one function, operation, or element. Further, in the present disclosure, a term "comprise" or "have" indicates presence of a characteristic, numeral, operation, element, component, or combination thereof described in a specification and does not exclude presence or addition of at least one other characteristic, numeral, operation, element, component, or combination thereof.

In the present disclosure, an expression "or" includes any combination or the entire combination of together listed words. For example, "A or B" may include A, B, or A and B.

An expression of a first and a second in the present disclosure may represent various elements of the present disclosure, but do not limit corresponding elements. For example, the expression does not limit order and/or importance of corresponding elements. The expression may be used for distinguishing one element from another element. For example, both a first user device and a second user device are user devices and represent different user devices. For example, a first constituent element may be referred to as a second constituent element without deviating from the scope of the present disclosure, and similarly, a second constituent element may be referred to as a first constituent element.

When it is described that an element is "coupled" to another element, the element may be "directly coupled" to the other element or "electrically coupled" to the other element through a third element. However, when it is described that an element is "directly coupled" to another element, no element may exist between the element and the other element.

Unless differently defined, entire terms including a technical term and a scientific term used here have the same meaning as a meaning that may be generally understood by a person of common skill in the art. It should be analyzed that generally using terms defined in a dictionary have a meaning corresponding to that of a context of related technology and are not analyzed as an ideal or excessively formal meaning unless explicitly defined.

In this disclosure, an electronic device may be a device that involves a communication function. For example, an electronic device may be a smart phone, a tablet personal computer (PC), a mobile phone, a video phone, an e-book reader, a desktop PC, a laptop PC, a netbook computer, a personal digital assistant (PDA), a portable multimedia player (PMP), a Moving Picture Experts Group (MPEG) audio layer 3 (MP3) player, a portable medical device, a digital camera, or a wearable device (e.g., a head-mounted device (HMD) such as electronic glasses, electronic clothes, an electronic bracelet, an electronic necklace, an electronic appcessory, or a smart watch).

According to some embodiments, an electronic device may be a smart home appliance that involves a communication function. For example, an electronic device may be a television (TV), a digital versatile disc (DVD) player, audio equipment, a refrigerator, an air conditioner, a vacuum cleaner, an oven, a microwave, a washing machine, an air cleaner, a set-top box, a TV box (e.g., Samsung HomeSync™, Apple TV™, Google TV™, etc.), a game console, an electronic dictionary, an electronic key, a camcorder, or an electronic picture frame.

According to some embodiments, an electronic device may be a medical device (e.g., magnetic resonance angiography (MRA), magnetic resonance imaging (MRI), computed tomography (CT), ultrasonography, etc.), a navigation device, a global positioning system (GPS) receiver, an event data recorder (EDR), a flight data recorder (FDR), a car infotainment device, electronic equipment for ship (e.g., a marine navigation system, a gyrocompass, etc.), avionics, security equipment, or an industrial or home robot.

According to some embodiments, an electronic device may be furniture or part of a building or construction having a communication function, an electronic board, an electronic signature receiving device, a projector, or various measuring instruments (e.g., a water meter, an electric meter, a gas meter, a wave meter, etc.). An electronic device disclosed herein may be one of the above-mentioned devices or any combination thereof.

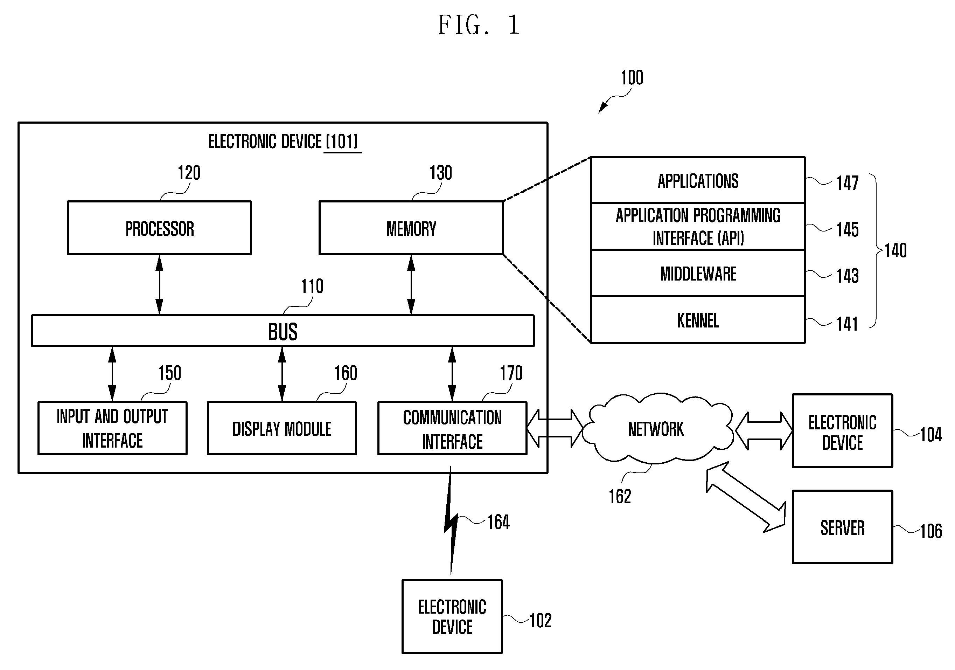

FIG. 1 is a diagram illustrating a network configuration of an electronic apparatus according to various embodiments of the present disclosure.

Referring to the block diagram 100 of FIG. 1, the electronic apparatus 101 may include a bus 110, a processor 120, a memory 130, a user input module or input and output interface 150, a display or display module 160, and a communication interface 170. The parts above may be in multiples. For example, there could be one or more processors 120.

The bus 110 may be a circuit for interconnecting elements described above and for allowing a communication, e.g. by transferring a control message, between the elements described above.

The processor 120 can receive commands from the above-mentioned other elements, e.g. the memory 130, the user input module 150, the display 160, and the communication interface 170, through for example, the bus 110, decipher the received commands, and perform operations and/or data processing according to the deciphered commands.

The memory 130 can store commands received from the processor 120 and/or other elements, e.g. the user input module 150, the display 160, and the communication interface 170, and/or commands and/or data generated by the processor 120 and/or other elements. The memory 130 may include software and/or programs 140, such as a kernel 141, middleware 143, an application programming interface (API) 145, and an application 147. Each of the programming modules described above may be configured by software, firmware, hardware, and/or combinations of two or more thereof.

The kernel 141 can control and/or manage system resources, e.g. the bus 110, the processor 120 or the memory 130, used for execution of operations and/or functions implemented in other programming modules, such as the middleware 143, the API 145, and/or the application 147. Further, the kernel 141 can provide an interface through which the middleware 143, the API 145, and/or the application 147 can access and then control and/or manage an individual element of the electronic device 101.

The middleware 143 can perform a relay function which allows the API 145 and/or the application 147 to communicate with and exchange data with the kernel 141. Further, in relation to operation requests received from at least one of an application 147, the middleware 143 can perform load balancing in relation to the operation requests by, for example, giving a priority in using a system resource, e.g. the bus 110, the processor 120, and/or the memory 130, of the electronic device 101 to at least one application from among the at least one of the application 147.

The API 145 is an interface through which the application 147 can control a function provided by the kernel 141 and/or the middleware 143, and may include, for example, at least one interface or function for file control, window control, image processing, and/or character control.

The user input module 150 can receive, for example, a command and/or data from a user, and transfer the received command and/or data to the processor 120 and/or the memory 130 through the bus 110. The display 160 can display an image, a video, and/or data to a user.

The communication interface 170 can establish a communication between the electronic device 101 and other electronic devices 102 and 104 and/or a server 164. The communication interface 170 can support short range communication protocols, e.g. a wireless fidelity (Wi-Fi) protocol, a Bluetooth (BT) protocol, and a near field communication (NFC) protocol, communication networks, e.g. internet, local area network (LAN), wide area network (WAN), a telecommunication network, a cellular network, and a satellite network, or a plain old telephone service (POTS), or any other similar and/or suitable communication networks, such as network 162, or the like. Each of the electronic devices 102 and 104 may be a same type and/or different types of electronic apparatus.

The first and second external electronic devices 102 and 104 may be devices that are the same as or different from the electronic device 101. According to an embodiment of the present disclosure, the server 106 may include a group of one or more servers. According to various embodiments, the whole or a part of operations that are executed in the electronic device 101 may be executed in another or a plurality of electronic devices (e.g., electronic devices 102 and 104 or server 106).

According to one embodiment of the present disclosure, in the case where the electronic device 101 should perform a speech recognition function or a speech recognition service automatically or in accordance with a request, the electronic device 101 may request another device (e.g., electronic devices 102 and 104 or server 106) to perform at least a part of related functions instead of or in addition to self-execution of the function or the service. If the speech recognition function is activated, the communication interface 170 may transfer an audio signal and/or speech signal transferred through the audio input device (e.g., microphone) to the server that performs the speech recognition function.

Another electronic device (e.g., electronic devices 102 and 104 or server 106) may execute a requested function or an additional function, and may transfer the result of the execution to the electronic device 101. For example, the server 106 may perform speech recognition with respect to the audio signal and/or speech signal transferred from the electronic device 101 and may provide the result of the recognition to the electronic device 101. According to various embodiments, if the speech recognition has succeeded, the server 106 may convert the speech signal into text information, and may transfer speech command information based on the converted text information or function execution information corresponding to the speech command to the electronic device 101. According to various embodiments, if the speech recognition has failed, the server 106 may transfer speech recognition failure information to the electronic device 101.

The electronic device 101 may receive the result of the speech recognition from the server 106, and may provide a requested function or service through processing of the result of the speech recognition as it is or additional processing thereof. For this, for example, cloud computing, distributed computing, or client-server computing technology may be used.

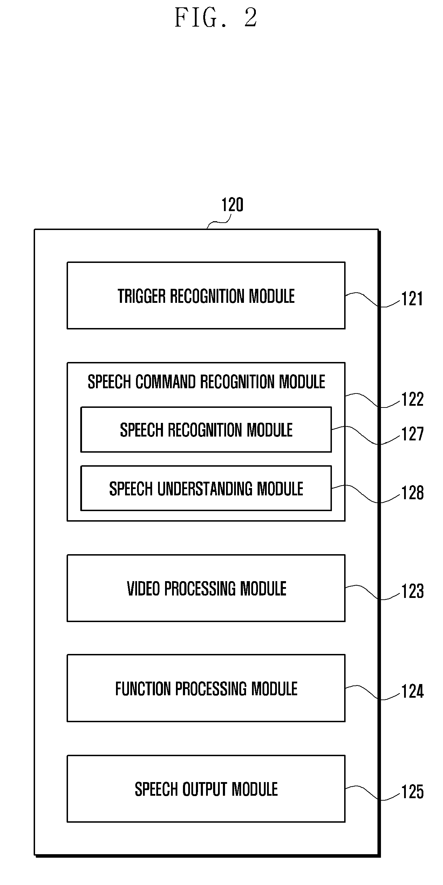

FIG. 2 is a diagram illustrating a configuration of a processor of an electronic device according to various embodiments of the present disclosure.

Referring to FIG. 2, a processor 120 of an electronic device 101 may include a trigger recognition module 121, a speech command recognition module 122, a video processing module 123, a function control module 124, and a speech output module 125.

If a user input is detected through various input devices provided in the electronic device 101, the trigger recognition module 121 may determine whether a speech recognition activation condition occurs. The speech recognition activation condition may be differently set for operations of the input device provided in the electronic device. For example, if a short or long press input of a physical hard key, such as a button type key (e.g., power key, volume key, or home key), provided on the electronic device or a soft key, such as a touch key (e.g., menu key or cancellation key), is detected, or a specific motion input (or gesture input) is detected through a pressure sensor or a motion sensor, the trigger recognition module 121 may determine that the speech recognition activation condition based on the user input has occurred. According to a certain embodiment, the trigger recognition module 121 may receive a trigger input from an external device (e.g., wearable device connected through short-range wireless communication).

If the speech recognition activation condition occurs with respect to the user input, the trigger recognition module 121 may confirm an activation request from the speech command recognition module 122 and trigger information according to the user input type, and transfer the trigger information to the speech command recognition module 122. Here, the trigger information may be information that indicates the kind of an input hard key or soft key, an input time of the hard key or soft key, gesture direction, current location information of an electronic device, and whether an external device is connected thereto. Further, the trigger information may be information that indicates a specific function domain (e.g., message domain, call domain, contact address domain, music reproduction domain, or camera domain) that is determined in accordance with the user input type.

According to an embodiment of the present disclosure, the trigger recognition module 121 may perform recognition of a trigger speech for triggering the speech command recognition module 122. For example, the trigger speech may be a designated word (e.g., isolating word such as "Hi Galaxy" or keyword). The trigger recognition module 121 may transfer a speech signal that is additionally input after the trigger speech is recognized to the speech command recognition module 122.

The speech command recognition module 122 may be activated in accordance with the activation request from the trigger recognition module 121, and may recognize the received speech signal as a command.

The speech command recognition module 122 may include a speech recognition module 127 and a speech understanding module 128. The speech recognition module 127 may convert the speech into a text. For example, the speech recognition module 127 may be a speech-to-text (STT) module. The speech understanding module 128 may determine the meaning of the converted text. For example, the speech understanding module 128 can recognize (understand) the receive speech signal as a command through performing of isolating word recognition, continuous speech recognition, or natural language recognition based on the converted text. The speech understanding module 128 may extract at least one of data and a command from the converted text.

According to a certain embodiment, the electronic device 101 may transfer the speech signal to a server for natural language recognition with respect to the received speech signal, and request performing of the speech recognition thereof.

The speech command recognition module 122 may recognize/understand the user's speech signal that is transferred through an audio input device (e.g., microphone), and generate a corresponding response command.

According to an embodiment of the present disclosure, the speech command recognition module 122 may be implemented only to recognize/understand the user's speech signal input thereto or may be implemented further to generate a response command corresponding to the speech signal or to execute an application.

The video processing module 123 may control the display to display a screen of a user interface (UI) corresponding to the user input. The video processing module 123 may dividedly provide a general function execution screen that corresponds to the user input and a speech recognition execution screen for a specific function domain. The video processing module 123 may provide, on the screen, at least one of notification information indicating that the reception of the speech input is in a standby state, notification information indicating that the speech recognition is going on, recognition result information, recognition failure information, and notification information indicating that the speech recognition for a specific function domain is activated.

Referring to FIG. 2, the function processing module 124 may control or process (execute) a function that corresponds to the speech command based on the result of the speech that is recognized by the speech command recognition module 122. If the speech command recognition module 122 generates the speech command that is limited to the specific function domain using the received speech signal, the function processing module 124 may perform the function that corresponds to the speech command. For example, in the case where the specific function domain according to the user input is a call domain indicating call origination and the received user's speech is "Hong Gildong", the function processing module 124 may control a call app to attempt phone call connection to Hong Gildong through execution of the call app.

The speech output module 125 may convert a text into a speech to be output. For example, the speech output module 125 may be a text-to-speech (TTS) module.

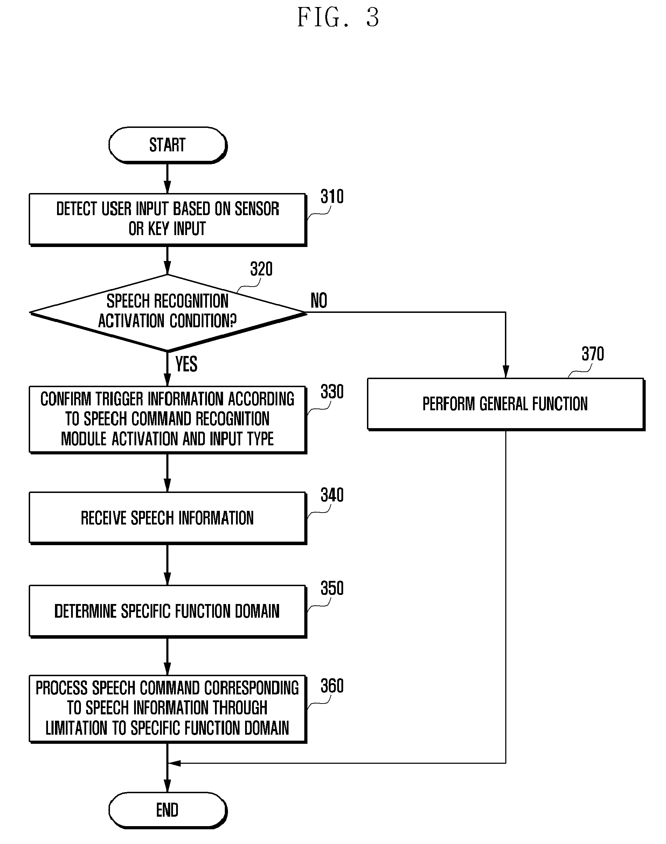

FIG. 3 is a flowchart illustrating a method for executing a function using speech recognition of an electronic device according to various embodiments of the present disclosure.

Prior to the detailed explanation, the memory of the electronic device according to an embodiment of the present disclosure may store a first software program that can be triggered in response to a user input (first user input). The first user input may include the existing set input (e.g., touch input of a call icon) for executing a specific program or function. The first software program may include at least one of an application program and software programs for executing the selected speech command.

Referring to FIG. 3, at operation 310, the processor 120 (shown in FIG. 2) of the electronic device detects a user input (second user input) based on a sensor or key input. The second user input is different from the first user input. For example, the processor 120 may detect a user input for selecting a hard key or a touch key provided on the electronic device, or may detect a specific motion input (or gesture input) through a pressure sensor or a motion sensor. According to a certain embodiment, in the case where the electronic device is connected to an external device (e.g., wearable device), the processor 120 may receive input information notifying that a user input has occurred in the external device from the external device.

At operation 320, the processor 120 determines whether the user input corresponds to a speech recognition activation condition, and if the user input corresponds to the speech recognition activation condition, the processor 120 proceeds to operation 330. For example, if a key press input is maintained for a predetermined time, or a predetermined specific motion input or specific input information is received from the external device, the processor 120 may determine that the user input corresponds to the speech recognition activation condition. The speech recognition activation condition is not limited thereto, but may be diversely set.

At operation 330, if the user input corresponds to the speech recognition activation condition, the processor 120 activates the speech command recognition module in response to the user input and confirms trigger information (e.g., information that a specific key is input over a designated time (trigger category = Power key_long press)) according to the user input type. For example, as the speech command recognition module is activated, the electronic device may activate the audio input device (e.g., microphone) to be switched to a standby state (or mode) for the speech input.

At operation 340, the processor 120 receives user's speech information (e.g., speech signal/data) that is input through the audio input device. At operation 350, the processor 120 determines a specific function domain for specific function execution/access based on the trigger information. Here, according to an embodiment of the present disclosure, it is illustrated that operation 340 and operation 350 are consecutively performed, but are not limited thereto. Operation 340 may be performed after operation 350 is performed, or both operations may be simultaneously performed.

The specific function domain may be information that is set to be able to execute/access a specific application program or a specific function. The specific function domain may be determined in accordance with the user input type. For example, the specific function domain may be differently set for one or a combination of the kind of hard key or soft key, the kind of key input (e.g., key input within a predetermined time (e.g., short touch or press), key input over the predetermined time (e.g., long touch or long press), or multiple inputs within the predetermined time (e.g., double touch or double click)), and the kind or direction of gesture. For example, the electronic device may set a call domain that indicates call app execution corresponding to a speech recognition activation condition for a power key, or set a music reproduction domain that indicates music app execution corresponding to a speech recognition activation condition for a volume key. Further, the electronic device may set multiple domains, such as text domain, call domain, and contact address domain, corresponding to the short press input of a power key through pressing of the power key for the predetermined time or less, and may set the call domain corresponding to the long press input of the power key. Further, the electronic device may set the call domain corresponding to the gesture input that moves upward after moving leftward, and set the music reproduction domain corresponding to the gesture input that moves downward after moving leftward. The detailed explanation thereof will be made later.

According to an embodiment of the present disclosure, in the case of activating the speech command recognition module, the processor 120 may provide notification information that indicates speech recognition activation or notification information that indicates speech recognition activation for a specific function domain on a UI screen.

At operation 360, the processor 120 performs a speech command that is limited to a specific function domain corresponding to input speech information. Specifically, the processor 120 may convert the speech information into a text through performing of the speech recognition with respect to the received speech information, and perform the speech command that is limited to the specific function domain based on the converted text information. For example, in the case where the specific function domain is a domain that indicates call connection execution and the received user's speech is "Hong Gildong", the processor 120 may confirm that Hong Gildong is included in a phone book after recognizing text information for the user's speech "Hong Gildong" through the speech recognition, and perform a phone call connection operation to Hong Gildong through execution of the call app. After the phone call connection operation is performed, the text information may be deleted. This is to prevent the text information "Hong Gildong" from being used by another program.

On the other hand, if the user input does not satisfy the speech recognition activation condition, the processor 120 performs a general function corresponding to the user input through proceeding to operation 370. For example, if the user input is a short press input for a volume key, the processor 120 may adjust the volume of the electronic device corresponding to the volume key. If the user input is a short press input for a power key or home key in a state in which the screen is turned off, the processor 120 may drive the display to display a lock screen or a home screen.

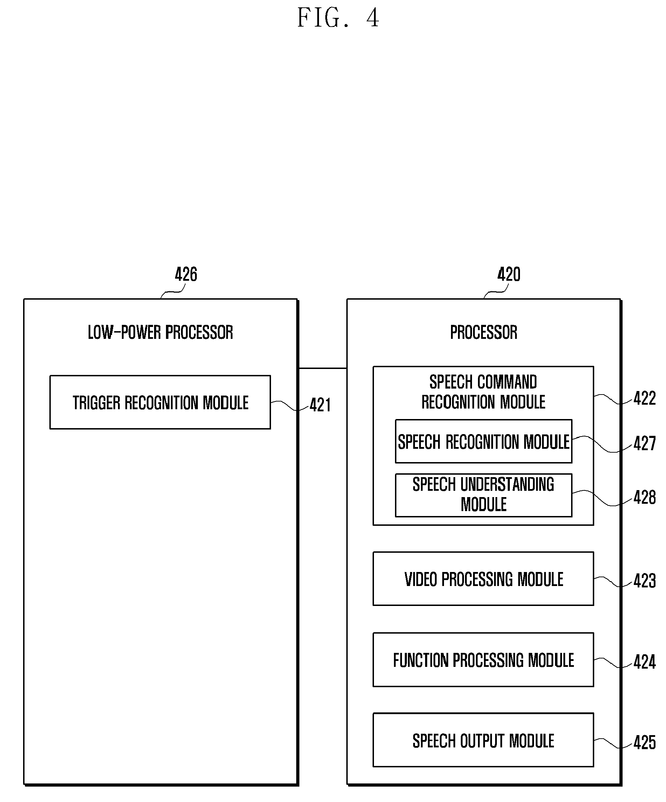

FIG. 4 is a diagram illustrating the configuration of a processor of an electronic device according to various embodiments of the present disclosure.

Referring to FIG. 4, an electronic device according to various embodiments of the present disclosure may additionally include a low-power processor that supports trigger speech recognition. For example, although not illustrated in the drawing, the electronic device according to the embodiment of FIG. 4 includes the configurations (e.g., the bus, memory, input/output interface, display, and communication interface) of the electronic device of FIG. 1, and the detailed explanation of the same configurations as those of FIG. 1, such as the bus, memory, input/output interface, display, and communication interface, will be omitted.

According to various embodiments of the present disclosure, a processor 420 may include a speech command recognition module 422, a video processing module 423, a function processing module 424, and a speech output module 425, and the low-power processor 426 may include a trigger recognition module 421. The low-power processor 426 may operate independently or dependently of the processor 420, and may be in a sleep mode or in an operation mode. The speech command recognition module 422 may include a speech recognition module 427 and a natural language understanding module 428.

If it is detected that the speech recognition activation condition occurs with respect to the user input through the trigger recognition module 421, the low-power processor 426 may awake the processor 420, request activation of the speech command recognition module 422 (e.g., transmit a wakeup signal), and transfer the trigger information. Thereafter, if the speech command recognition module 422 is activated, the low-power processor 426 may transfer the speech information that is received through the audio input device to the speech command recognition module 422 of the processor 420. Then, the speech command recognition module 422 of the processor 420 may recognize/understand the transferred user's speech signal, generate a response command to limit the speech signal to a specific function domain based on the trigger information, and process or control a function that corresponds to the response command.

According to an embodiment of the present disclosure, the low-power processor 426 may be an audio processing module (e.g., audio codec) that controls audio input/output. If the low-power processor 426 is the audio processing module, the low-power processor 426 may perform conversion of an analog signal into a digital signal or conversion of a digital signal into an analog signal, perform an audio input/output pre/post-processing function, and perform the operation of the trigger recognition module 421.

According to an embodiment of the present disclosure, the low-power processor 426 may perform recognition of a trigger speech for triggering the speech command recognition module 422. For example, the trigger speech may be a designated word (e.g., isolating word such as "Hi Galaxy"). The low-power processor 426 may transfer the speech information that is additionally input after the trigger speech is recognized to the processor 420. Then, the processor 420 may recognize the received speech information as a command. In this case, the speech command recognition module 422 may be a system which uses relatively greater resources (e.g., memory, calculation amount, and similarity measurement) for speech recognition determination than those for trigger speech recognition, and understands the speech information as an execution command.

Hereinafter, function execution through the speech recognition in the case where the trigger recognition module 421 is configured separately from the processor 420 in the electronic device will be described. However, the function execution through the speech recognition according to various embodiments of the present disclosure is not limited thereto. For example, the function execution through the speech recognition can also be performed through the configuration in which the trigger recognition module exists inside the processor.

According to various embodiments of the present disclosure, an electronic device may include a housing having a first surface and a second surface that is directed toward an opposite direction to the first surface; a microphone arranged to receive sound from an outside; at least one input device arranged on the housing; a touch screen display arranged on the first surface of the housing; a processor electrically connected to the microphone, the input device, and the display; and a memory electrically connected to the processor, wherein the memory stores a first software program that can be triggered in response to a first user input, and the memory, when executed, stores instructions to cause the processor to receive a second user input that is different from the first user input through at least one of the at least one input device and a selected region on the display, to switch the electronic device to a state in which the electronic device can receive a speech through the microphone in response to the second user input, to receive the speech from the outside through the microphone in the state, and to execute the first software program using at least a part of the received speech without receiving the first user input.

According to various embodiments, the first software program may include at least one of an application program and software programs for performing selected speech commands.

According to various embodiments, the memory may store a second software program that can be triggered in response to a third user input, and the instructions, when executed, may cause the processor to receive a fourth user input that is different from the first to third user inputs through at least one of the at least one input device and the selected region on the display, to switch the electronic device to a state in which the electronic device can receive the speech through the microphone in response to the fourth user input, to receive the speech from the outside through the microphone in the state, and to execute the second software program using at least a part of the received speech without receiving the third user input.

According to various embodiments, the instructions may cause the processor to convert the received speech into a text, to extract at least one of data and a command related to the first software program using the converted text, and to execute a selected function on the basis of at least one of the extracted data and command.

According to various embodiments, the instructions may cause the processor not to use the converted text for other software programs excluding the first software program after executing the selected function.

According to various embodiments, the instructions may cause the processor to switch the electronic device to a state in which the electronic device can receive the speech through the microphone in response to the second user input, and then to display indication that indicates the first software program on the display.

According to various embodiments, the instructions may cause the processor to receive the speech through the microphone only in a state in which the second user input is continuously maintained, and to interrupt reception of the speech through the microphone if the second user input is ended.

According to various embodiments, the input device may include a button arranged on the housing, and the second user input may include an operation of pressing the button.

According to various embodiments, the instructions may cause the processor to convert the received speech into a text, and to display the text on the display after the reception of the speech is ended.

According to various embodiments, the instructions may cause the processor to convert the received speech into a text, to display a user interface of the first software program on the display while the speech is received or after the reception of the speech is ended, and to display at least a part of the converted text on a part of the user interface.

According to various embodiments, the first software program may include a phone application program, the instructions may cause the processor to display an icon that indicates the phone application on the display, and the first user input may include a touch input of the icon.

According to various embodiments, the input device may include a physical button or a touch key, and the second user input may include an operation of pressing or touching the physical button or the touch key.

According to various embodiments, the instructions may cause the processor to display a lock screen on the display after the display is switched from a turn-off state to a turn-on state, and to switch the microphone to a state in which the microphone can receive the speech in response to the second user input in a state in which the lock screen is displayed.

According to various embodiments, the lock screen may include an icon that indicates the phone application, the first user input may include an operation of touching the icon for at least a first time, and the second user input may include an operation of touching or pressing the icon for a second time that is longer than the first time.

According to various embodiments, the processor may process the received speech through execution of a selected function based on at least one of an operation state of the electronic device and a type of the second user input.

According to various embodiments, in the case where the processor can process a speech command for a plurality of functions with respect to the received speech, the processor may display notification information for the plurality of functions on the display, and process the speech command through limitation to a function selected by a user from the notification information.

According to various embodiments, the processor may determine whether the electronic device is in a locking state corresponding to the second user input, execute only an access allowed function if the electronic device is in the locking state, and return to the locking state if the access allowed function is ended.

According to various embodiments, the second user input may include at least one of a hard key or soft key input, a gesture input, and an input received from an external device.

According to various embodiments of the present disclosure, an electronic device may include a housing; a microphone arranged to receive sound from an outside; at least one user interface arranged on an outer surface of the housing; a processor electrically connected to the microphone and the user interface; and a memory electrically connected to the processor to store a first software program that can be triggered in response to a first user input, wherein the memory, when executed, stores instructions to cause the processor to receive a second user input that is different from the first user input through the at least one user interface, to switch the electronic device to a state in which the electronic device can receive a speech through the microphone in response to the second user input, to receive the speech from the outside through the microphone in the state, and to execute the first software program using at least a part of the received speech without receiving the first user input.

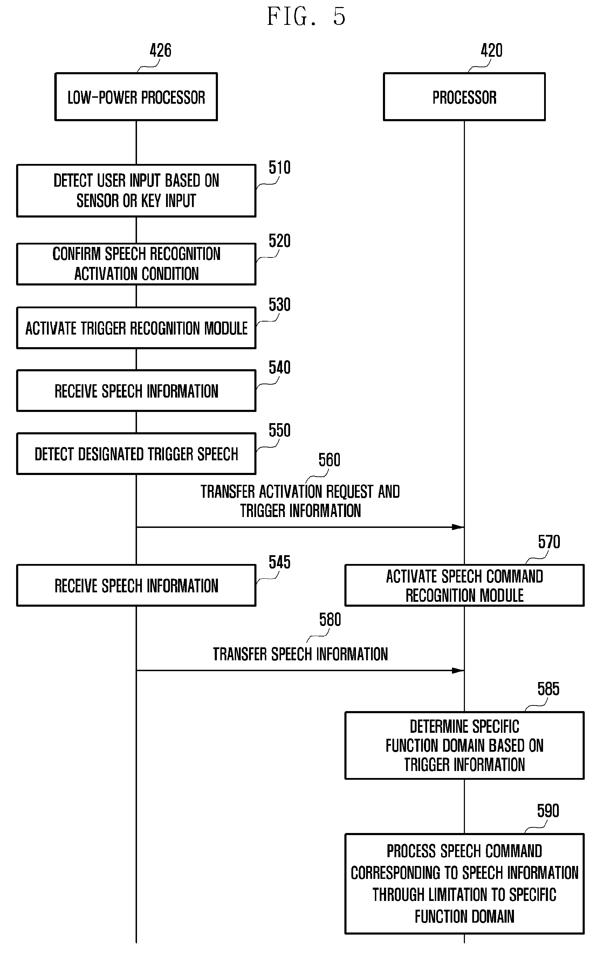

FIG. 5 is a flowchart illustrating a method for executing a function using speech recognition of an electronic device according to various embodiments of the present disclosure.

Referring to FIG. 5, at operation 510, the low-power processor 426 detects a user input based on a key input or a sensor input, and at operation 520, the low-power processor 426 confirms whether a speech recognition activation condition based on the user input has occurred. If the speech recognition activation condition based on the user input has occurred, at operation 530, the low-power processor 426 activates the trigger recognition module 421. In this case, the electronic device may activate the audio input device to be switched to a standby mode for the speech input.

At operation 540, the low-power processor 426 receives speech information, and at operation 550, the low-power processor 426 determines whether a designated trigger speech is detected through performing of trigger speech recognition.

On the other hand, according to an embodiment of the present disclosure, if the electronic device does not discriminate between the trigger speech recognition and the speech command recognition, operations 530 to 550 may be omitted. For example, the operations 530 to 550 may be omitted in accordance with the kind of sensor or key input detected at operation 510. For example, if the sensor or key input that is detected at operation 510 is maintained within a predetermined time (short press), the low-power processor 426 may perform the operations 520 to 550. In contrast, if the sensor or key input that is detected at operation 510 is maintained over the predetermined time (long press), the low-power processor 426 may perform the operations 520 to 560.

At operation 560, the low-power processor 426 awakes the processor 420, and transfers an activation request from the speech command recognition module 422 and the trigger information to the processor 420. At operation 570, the processor 420 activates the speech command recognition module 422. In this case, the low-power processor 426 may receive the speech information from the microphone at operation 545, and transfer the received speech information to the processor 420 at operation 580.

According to various embodiments, the low-power processor 426 is on standby for the speech input while a key press input is maintained, and if the key input is released, the low-power processor 426 may interrupt the speech input. For example, the low-power processor 426 may receive the speech information while a power key press input is maintained, and transfer the speech information to the processor 420 in real time until the power key press input is released, or may transfer the received speech information to the processor 420 at a release time.

At operation 585, the processor 420 determines a specific function domain based on the trigger information through the user input, and at operation 590, the processor 420 processes the speech command that corresponds to the speech information through a function that is set to be limited to the specific function domain. According to a certain embodiment, the operation 585 may be performed before, after, or simultaneously with the operation 570.

Hereinafter, explanation will be made based on the electronic device of FIG. 1. However, the following explanation may also be applied to the electronic device of FIG. 4 in the same (or similar) manner.

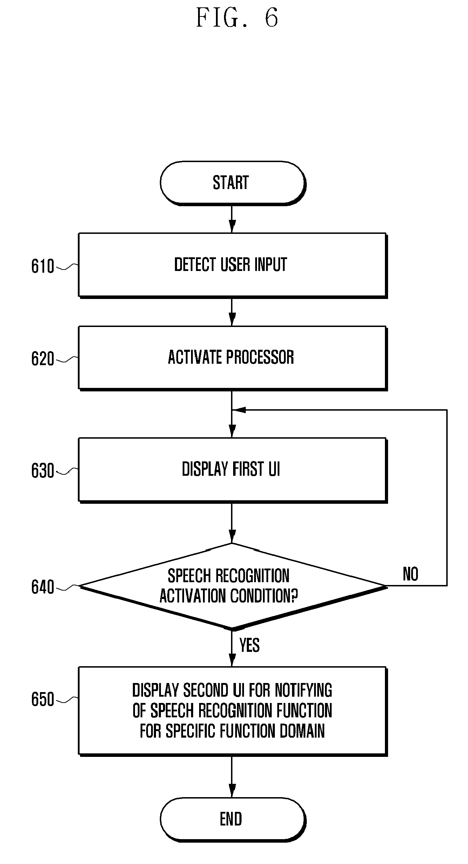

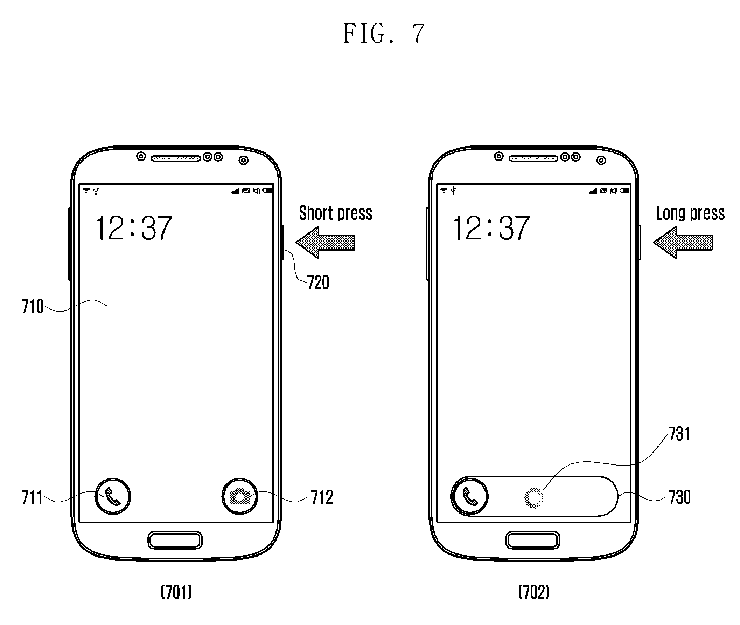

FIG. 6 is a flowchart illustrating a method for controlling a screen of an electronic device according to various embodiments of the present disclosure, and FIG. 7 is an exemplary diagram explaining a method for controlling a screen of an electronic device according to various embodiments of the present disclosure.

Referring to FIG. 6, the electronic device according to various embodiments may dividedly provide a general function execution screen that corresponds to the user input and a speech recognition execution screen for a specific function domain.

At operation 610, the electronic device detects an input of a specific key (e.g., any one of power key, home key, volume key, and soft key) and a user input based on a specific motion. At operation 620, the electronic device activates the processor corresponding to the user input (e.g., short touch or short press), and at operation 630, the electronic device displays a first user interface (UI) in response to the processor activation. For example, the first UI screen may be a lock screen, a home screen, or a standby screen depending on whether the electronic device is locked.

At operation 640, the electronic device may determine whether a speech recognition activation condition occurs with respect to the user input in a state in which the first UI screen is displayed. If the speech recognition activation condition occurs, at operation 650, the electronic device displays a second UI screen for notification of a speech recognition function for a specific function domain.

As an example, as illustrated in a screen [701] of FIG. 7, a user may perform a short press input with respect to a power key 720 of the electronic device in which the screen is turned off. The electronic device may display the first UI screen 710, for example, a standby screen, through driving of a display correspond to the short press input with respect to the power key 720. The first UI screen 710 may include a call icon 711 and a camera icon 712. Referring to object [702] of FIG. 7, in order to perform speech recognition for a specific domain, a user may perform a long press input with respect to the power key 720 of the electronic device. Then, the electronic device may recognize that the speech recognition activation condition occurs with respect to the power key 720, and activate the speech command recognition module. As illustrated in a screen [702] of FIG. 7, the electronic device may switch the first UI screen 710 to the second UI screen for notifying of the activation state of the speech recognition function. The second UI screen may display information 730 for notifying of the activation state of the speech recognition function or information 731 for notifying that the speech recognition function based on the specific function domain is being executed.

For example, if a specific function domain that indicates call app execution correspond to the speech recognition activation condition with respect to the power key 720 is set, the electronic device may include the information 730 that indicates the speech recognition activation based on the call app.

Thereafter, if user's speech information is input through the microphone in a state in which the speech recognition function based on the call app is activated, the electronic device may display the information 731 indicating that the speech recognition is being performed with respect to the user speech.

According to an embodiment of the present disclosure, if the speech command recognition module is activated, the electronic device may output at least one of visual, auditory, and tactile feedbacks (e.g., sound, vibration, or graphic effect) for notifying the user of the switchover to a standby mode for the speech input, and if the user releases the power key after inputting the speech, the electronic device may output at least one of the visual, auditory, and tactile feedbacks for notifying that the speech input is ended.

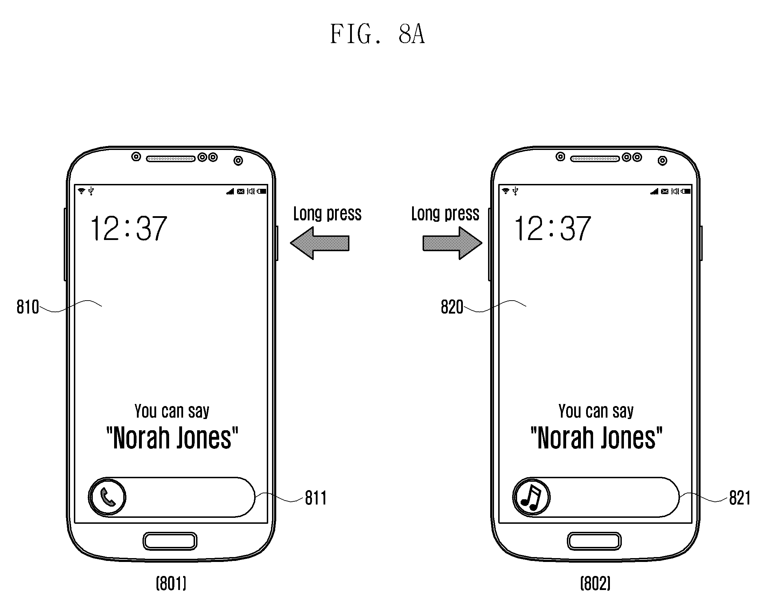

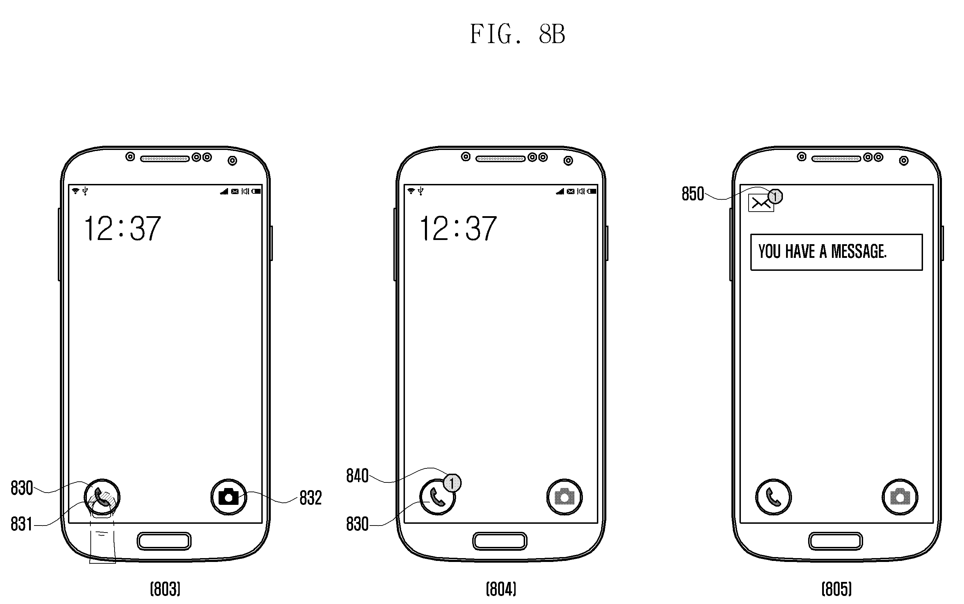

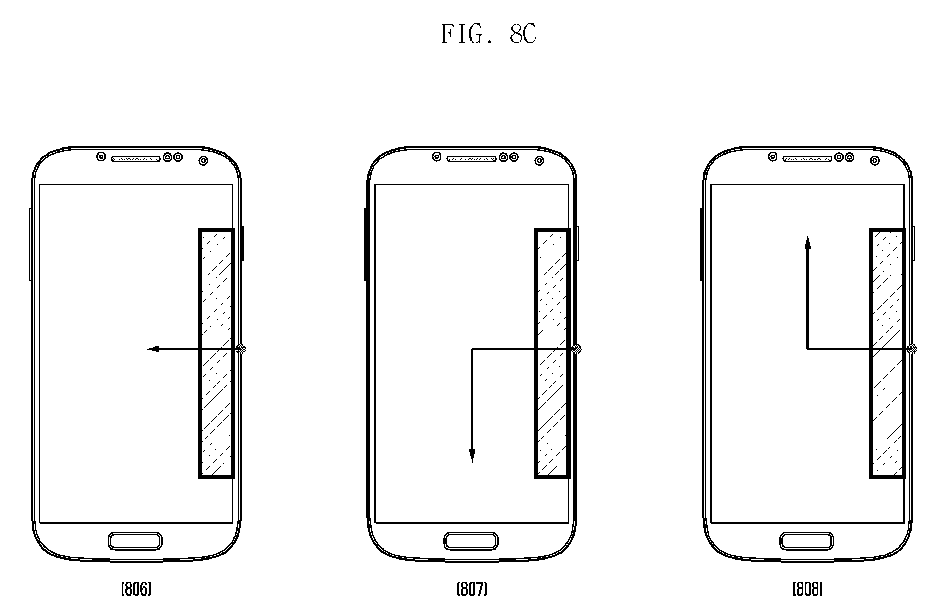

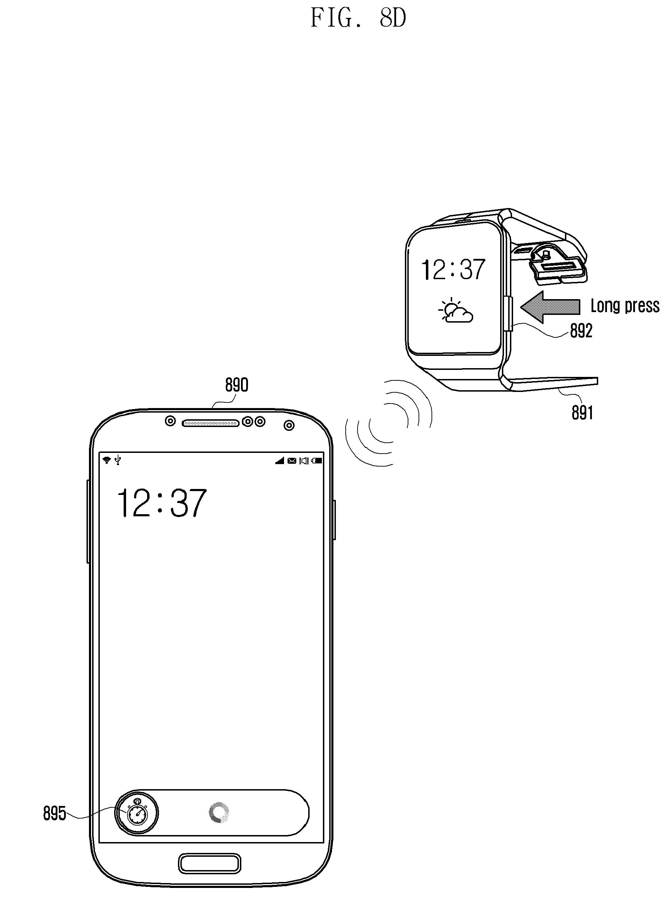

FIGS. 8A, 8B, 8C, and 8D are diagrams explaining various user input methods for triggering speech recognition according to various embodiments of the present disclosure.

Referring to FIGS. 8A, 8B, 8C, and 8D, the electronic device may activate the speech command recognition module in response to various user inputs, and support to process the speech command that is limited to the specific function domain.

According to an embodiment of the present disclosure, which is similar to the embodiment of FIG. 8A, the electronic device may activate the speech command recognition module corresponding to a physical key that is exposed to an outside of the electronic device, and support to process the speech command based on the specific function domain. In this case, the electronic device may differently map the specific function domain for each kind of physical key. For example, if a long press input is detected on the power key as in a screen [801] of FIG. 8A, the electronic device is on standby for the speech recognition mode based on the call connection domain that is mapped on the power key. In this case, the electronic device may display, on the UI screen 810, information 811 indicating that the speech recognition mode for the call connection domain is being operated on the standby screen 811. Thereafter, if the user inputs speech information related to a specific person (e.g., "Norah Jones"), the electronic device may recognize the user speech of the specific person, and process the speech command so that the call is connected to the electronic device of the recognized specific person.

As another example, as in a screen [802] of FIG. 8A, if a long press input is detected with respect to the volume key, the electronic device is on standby for the speech recognition mode based on the music reproduction domain that is mapped on the volume key. The electronic device may display information 821, on the UI screen 820, indicating that the speech recognition mode for the music reproduction domain is being operated. Thereafter, if the user inputs the speech information for the specific person (e.g., Norah Jones"), the electronic device may recognize the user speech for the specific person, and process the speech command so as to select and reproduce music related the recognized specific person.

According to another embodiment of the present disclosure, which is similar to the embodiment of FIG. 8B, the electronic device may activate the speech command recognition module based on the soft key input in addition to the physical hard key, and support to execute the speech command based on the specific function execution domain. For example, if the user performs a short press input (e.g., press input within a predetermined time (e.g., one second)) with respect to the power key in a state in which the screen is turned off, the electronic device may display a standby screen as in a screen [803]. The standby screen may display a specific function execution icon, for example, a call icon 830 and a camera icon 832.

According to various embodiments, the electronic device may activate the speech command recognition module in response to a long press input 831 for the call icon 830 that is displayed on the standby screen, and may switch to a speech recognition mode based on a call connection domain that is mapped on the call icon 830. Thereafter, the electronic device may recognize a user speech (e.g., speech information "Norah Jones") that is received through the microphone, search for information related to "Norah Jones" from a contact address list through confirming of trigger information for the call icon (e.g., trigger_category = CALL_ICON_LONG_PRESSED), and execute call connection to "Norah Jones" if "Norah Jones" is searched for.

According to various embodiments, if a long press input for a camera icon 832 is detected on the standby screen as the screen [803] of FIG. 8B, the electronic device may switch to a speech recognition mode based on a camera function domain that is mapped on the camera icon 832. Thereafter, the electronic device may process a speech command related to a camera function based on a user speech that is received through the microphone. For example, in the case where a speech "black and white mode" is input in a speech input standby state after the camera icon 832 is long pressed, the electronic device may execute a camera app according to a specific function domain that is set to the camera icon 832, and perform a photographing technique of the black and white mode. Further, if the user performs long press with respect to the camera icon 832 and inputs a speech "imaging", the electronic device may execute the camera app, and change the present mode to a moving image capturing mode to execute moving image recording.

According to another embodiment, if there exists a call notification image in absence in the electronic device, the electronic device may be on standby for a speech command based on the specific function domain related to the call notification message in absence on the basis of the user input. For example, as illustrated in a screen [804] of FIG. 8B, if a call message occurs in absence, the electronic device may display an absence notification message icon 840 on the call icon 830 on the standby screen. If the user inputs speech information "call" after performing a long press of the absence notification message icon 840 or the call icon 830, the electronic device may execute a call connection to an opposite party's device related to the call message in absence.

According to another embodiment of the present disclosure, if there exists an unconfirmed message in the electronic device, the electronic device may be on standby for a speech command based on a specific domain for the unconfirmed message function on the basis of the user input. For example, as illustrated in a screen [805] of FIG. 8B, if the unconfirmed message occurs, the electronic device may display an unconfirmed message icon 850 on the standby screen. If the user inputs speech information after performing a long press of the unconfirmed message icon 850, the electronic device may limit the speech to a specific domain for transmitting a text message to an opposite party of the unconfirmed message, convert the speech information that is transferred from the user into a text, and include the converted text in the message to transmit the text message to the opposite party.

According to various embodiments, similar to the embodiment of FIG. 8C, the electronic device may activate the speech command recognition module based on a specific gesture, and support to execute the speech command based on the specific function domain. For example, as illustrated in a screen [806] of FIG. 8C, the user may perform a left swipe motion that moves from the right end to the left side of the electronic device. If the left swipe motion is sensed, the electronic device may trigger the speech recognition function. Thereafter, the user may input the speech information. The electronic device may process the speech command according to the input speech information without being limited to a specific domain corresponding to the left swipe motion, but is not limited thereto.

As another example, as illustrated in a screen [807] of FIG. 8C, after the left swipe motion, a left-down swipe motion may be performed in a downward direction, or as illustrated in a screen [808] of FIG. 8C, a left-up swipe motion may be performed in an upward direction. In this case, the electronic device may detect that the speech recognition activation condition occurs through the left swipe motion, and may determine the specific domain through the left-up or left-down swipe motion. For example, the electronic device may process the speech command with respect to the received speech through limitation to a call domain when the left-down swipe motion is sensed, or may process the speech command with respect to the received speech through limitation to a message transmission domain when the left-up swipe motion is sensed. For example, if the user inputs the speech "Hong Gildong" after performing the left-down swipe motion, the electronic device may process the speech command so as to execute call connection to the electronic device of Hong Gildong corresponding to the speech input "Hong Gildong".

According to various embodiments, similar to the embodiment of FIG. 8D, the electronic device may activate the speech command recognition module based on an input signal that is transferred from an external device, and support to execute the speech command through limitation to a function domain related to an external device. For example, as illustrated in FIG. 8D, the electronic device 890 may be connected to an external device 891 (e.g., a smart location or a smart watch) through short-range communication. The user may perform a long press with respect to a key 892 provided on the external device in a state in which the electronic device 890 and the external device 891 are connected to each other. Then, the external device 891 may transfer input information for notifying that a long press occurs with respect to the key input of the external device or trigger information to the electronic device 890. If a speech recognition activation condition based on the external device occurs, the electronic device 890 may activate the speech command recognition module, and process the speech command with respect to the received speech through limitation to a function domain (e.g., smart watch related function) related to the external device.

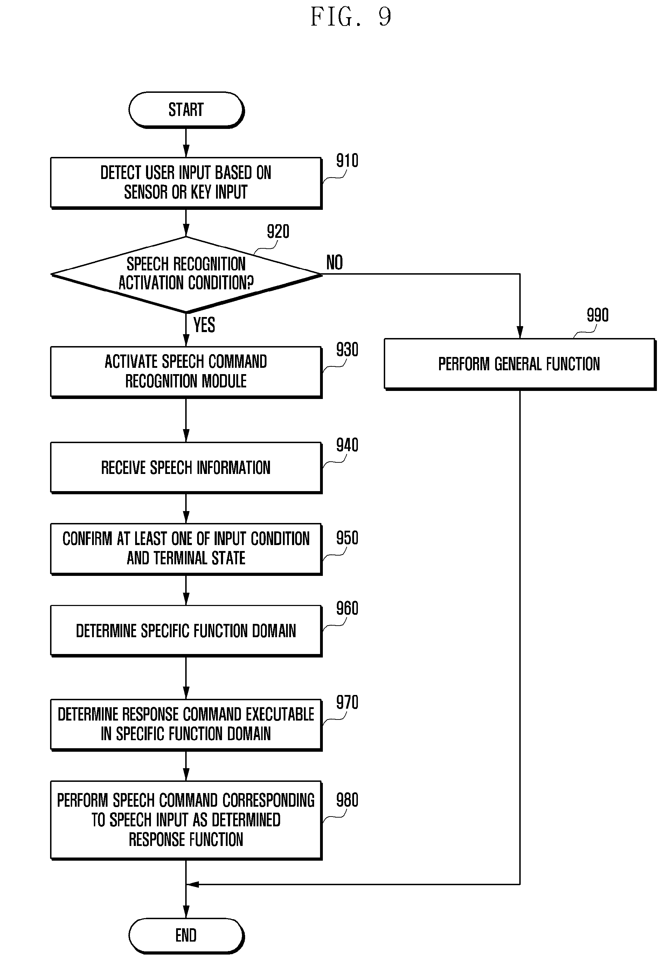

FIG. 9 is a flowchart illustrating a method for executing a function using speech recognition of an electronic device according to various embodiments of the present disclosure.

Referring to FIG. 9, at operation 910, the processor 120 (shown in FIG. 1) of the electronic device detects a user input based on a sensor or key input. At operation 920, the processor 120 determines whether a speech recognition activation condition occurs through the user input, and if the speech recognition activation condition does not occur, the processor 120 proceeds to operation 990 to perform a general function that corresponds to the user input.

At operation 930, if the speech recognition activation condition occurs, the processor 120 activates the speech command recognition module. At operation 940, the processor 120 receives user's speech information (e.g., speech signal/data) that is input through the audio input device. At operation 950, the processor 120 confirms at least one of the user input type, such as the kind of hard key or soft key, the kind of key input (short touch or short press, long touch or long press, double touch or double click), and the kind or direction of gesture, and the operation state, such as whether to be connected to the external device and the current location information of the electronic device.

At operation 960, the processor 120 confirms a specific function domain based on the confirmed information, and at operation 970, the processor 120 determines a response command that can be executed in the specific function domain. At operation 980, the processor 120 processes a speech command so as to process the response command selected in the specific domain.

For example, in the case of processing the speech command through limitation to the specific function domain, the speech command for a plurality of functions may be generated using the input speech information. For example, if the speech information "Hong Gildong" is input, the electronic device may search for an object of the command performance in a contact address list in order to process the speech command through limitations to the call connection domain. In this case, if there exist "Mr. Hong Gildong", "Manager Hong Gildong", and "President Hong Gildong" in a contact address list, they may be objects of the command performance in response to the speech "Hong Gildong". If the speech command is generated with respect to the plurality of functions, the electronic device may provide command performance information to the user, and determine the response function in accordance with the user's selection.

As another example, in the case where the plurality of speech commands is generated with respect to the speech "Hong Gildong", the electronic device may select a response function of priority based on call log information or relation information (e.g., relation_category = {FAMILY, FRIEND, WORK, and the like}).

According to another embodiment of the present disclosure, the electronic device may process the speech command through limitation to another specific function domain according to the location information of the electronic device. For example, if a long press is performed with respect to a volume key of the electronic device of the user, it can be determined whether the current location of the user is a company site or a home site through comparison of the current location information of the electronic device with designated location information. If the long press for the volume key is input at the home site, the electronic device may process the speech command with respect to the speech input that is input thereafter through limitation to a music execution function domain. For example, if the user inputs the speech "Hong Gildong" after inputting the long press with respect to the volume key at the home site, the electronic device may execute a music reproduction app, and process the speech command so as to select and reproduce music related to Hong Gildong. In contrast, if the user inputs the speech "Hong Gildong" after inputting the long press with respect to the volume key at the company site, the electronic device may execute an app related to the company, for example, a schedule app, and process the speech command so as to display schedule information related to Hong Gildong on the screen.

According to another embodiment of the present disclosure, the electronic device may limit the speech command to the call connection attempt in accordance with the input condition for the call icon, or set an execution command for displaying contact address information. For example, if the user inputs the speech "Hong Gildong" after inputting the long press with respect to the call icon, the electronic device may process the speech command so as to attempt the call connection to a phone device of Hong Gildong through limitation to the call connection domain. In contrast, if the user inputs the speech "Hong Gildong" after inputting tap twice with respect to the call icon, the electronic device may execute the speech command so as to provide the contact address information related to "Hong Gildong" through limitation to a contact address function domain.

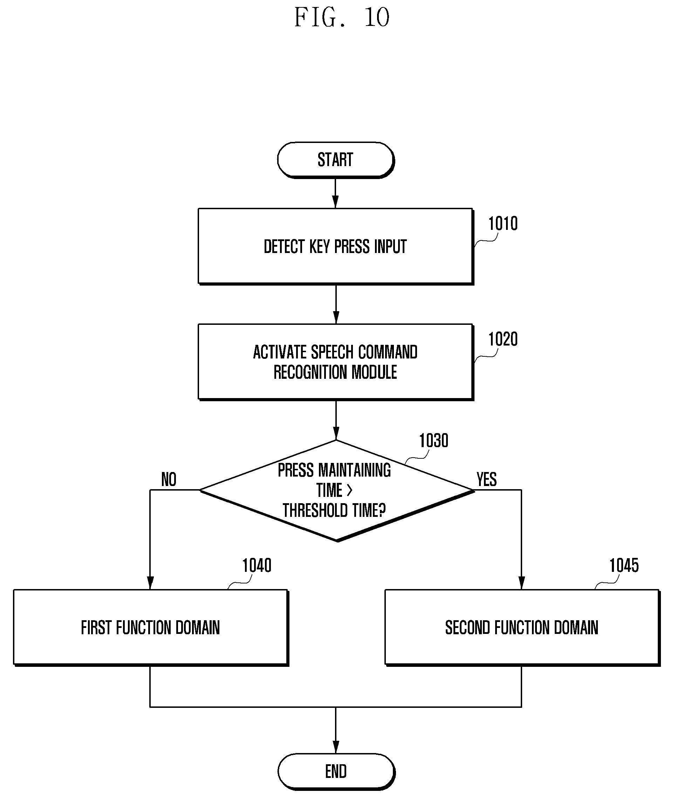

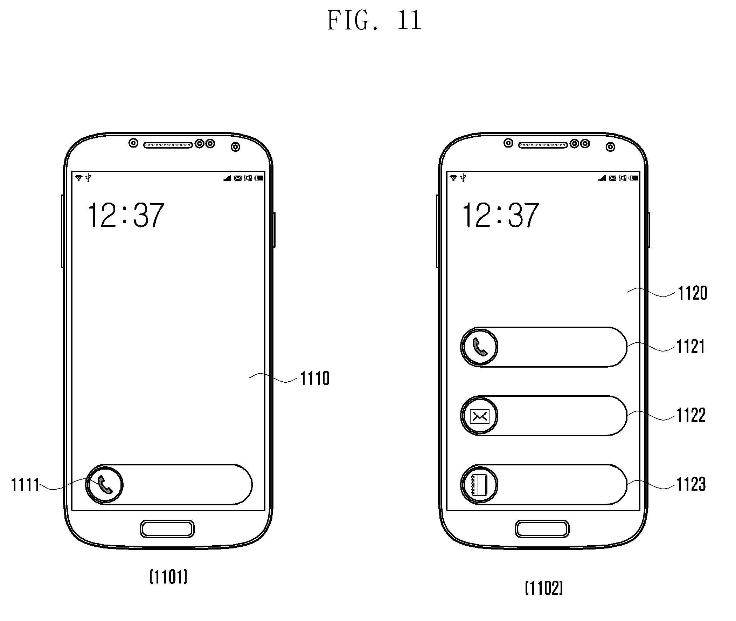

FIG. 10 is a flowchart illustrating a method for determining a domain in accordance with a key input time according to various embodiments of the present disclosure, and FIG. 11 is a diagram of a screen explaining a method for determining a domain in accordance with a key input time according to various embodiments of the present disclosure.

Referring to FIG. 10, the electronic device according to various embodiments may process the speech command through limitation to different function domains in accordance with a long press input time. At operation 1010, the processor 120 (shown in FIG. 1) of the electronic device detects the user input for pressing keys (e.g., power key, home key, volume key, and soft key). At operation 1020, the processor 120 activates the speech command recognition module in response to the press input. At operation 1030, the processor 120 determines whether the press input time is maintained over a designated threshold time, and if the press input is made within the threshold time, at operation 1040, the processor 120 processes the speech command through limitation to a first function domain with respect to the speech information that is input thereafter. At operation 1045, if the press input is made over the threshold time, the processor 120 process the speech command through limitation to a second function domain with respect to the speech information that is input thereafter.

For example, if the press input of the power key is maintained for a time that is longer than the threshold time, the electronic device may confirm trigger information (trigger_category = POWER_KEY_LONG_PRESSED), and if the speech "Hong Gildong" is input as illustrated in a screen [1101] of FIG. 11, the electronic device may process the speech command through limitation to the call connection function. The electronic device may display information 1111 notifying that the call connection function is triggered on one side of the standby screen 1110.

If the press input of the power key is maintained for a time that is shorter than the threshold time, the electronic device may confirm trigger information (trigger_category = POWER_KEY_SHORT_PRESSED), and process the speech command without limitation to the specific function domain. For example, if the press input of the power key is maintained for the time that is shorter than the threshold time as illustrated in a screen [1102] of FIG. 11, the electronic device may display call domain information 1121, message domain information 1122, and contact address domain information 1123 on the standby screen 1120. The electronic device may transfer a message, execute the call connection, or provide contact address information based on the speech information (e.g., Hong Gildong) that is input thereafter in accordance with the user's selection for multiple pieces of domain information 1121, 1122, and 1123.

According to various embodiments of the present disclosure, a method for executing a function using speech recognition of an electronic device may include receiving a user input; switching the electronic device to a state in which the electronic device can receive a speech through a microphone if the received user input satisfies a speech recognition activation condition; receiving speech information from an outside through the microphone; confirming a specific function execution domain based on the user input; and processing a speech command using the received speech information through limitation to the confirmed function execution domain.

According to various embodiments, the method may further includes executing a general function that corresponds to the user input if the user input does not satisfy the speech recognition activation condition.

According to various embodiments, the confirming of the specific function execution domain may include confirming trigger information that indicates the speech recognition activation condition of the user input, and confirming an execution command of a specific application program that is set to correspond to the trigger information.

According to various embodiments, the user input may be at least one of a physical hard key selection input, a soft icon selection input, a motion gesture input of the electronic device, and an input received from an external device.

According to various embodiments, the processing of the speech command may further include determining at least one of an operation state of the electronic device and a type of the user input, wherein a specific function is selected based on the result of the determination, and the speech command is processed through execution of the selected specific function with respect to the received speech.

According to various embodiments, the receiving of the speech information from the outside through the microphone may include receiving the speech while the user input is maintained, and performing speech recognition with respect to the received speech information when the user input is released.

According to various embodiments, the processing of the speech command may include determining whether the electronic device is in a locking state; executing only an access allowed specific application function if the electronic device is in the locking state; and returning to the locking state if the specific application function is ended.

According to various embodiments of the present disclosure, a method for executing a function using speech recognition of an electronic device including a housing having a first surface and a second surface that is directed toward an opposite direction to the first surface, a microphone arranged to receive sound from an outside, at least one input device arranged on the housing, a touch screen display arranged on the first surface of the housing, a processor electrically connected to the microphone, the input device, and the display, and a memory electrically connected to the processor to store a first software program that can be triggered in response to a first user input, may include causing the electronic device to receive a second user input that is different from the first user input through at least one of the at least one input device and a selected region of the display; causing the electronic device to switch the electronic device to a state in which the electronic device can receive a speech through the microphone in response to the second user input; causing the electronic device to receive the speech from the outside through the microphone in the state; and causing the electronic device to execute the first software program using at least a part of the received speech without receiving the first user input.

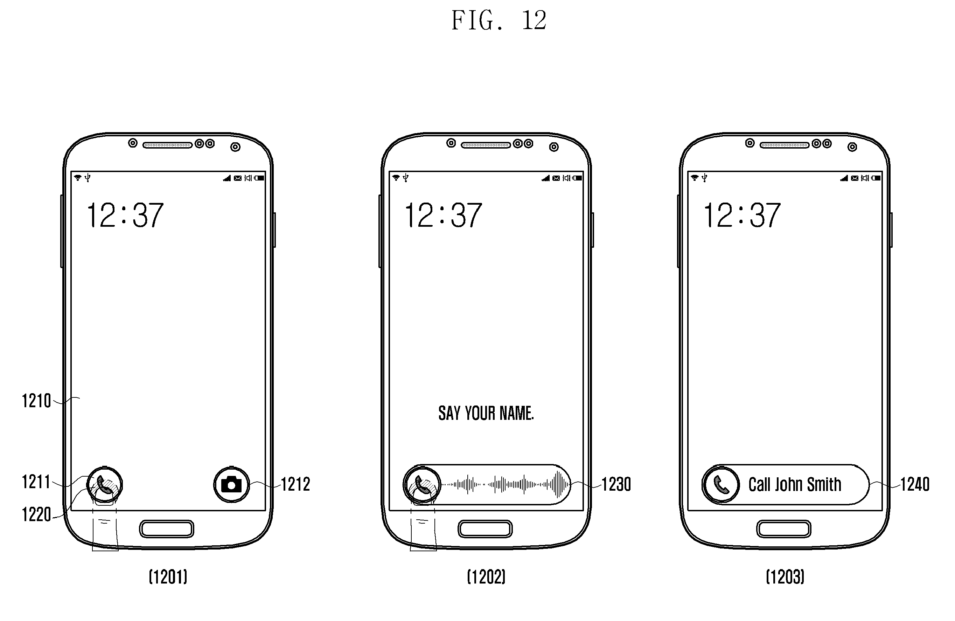

FIG. 12 is a diagram of a screen explaining a method for triggering speech recognition using icons according to various embodiments of the present disclosure.

Referring to FIG. 12, as illustrated in a screen [1201], the electronic device may display a standby screen 1210. The standby screen 1210 according to an embodiment may include a call icon 1211 and a camera icon 1212, and if a call message in absence or an unconfirmed message occurs, the standby screen 1210 may display a notification icon for the call message in absence or the unconfirmed message.

The user may perform a long press input 1220 with respect to a power key or the call icon that is displayed on the standby screen. Then, the electronic device may be on standby for processing of a specific function domain that is set on the power key or the call icon, for example, a speech command based on a call connection domain. As illustrated in a screen [1202] of FIG. 12, the electronic device may provide the user that the speech recognition function is activated through extension of a region for the call icon 1211 that is displayed on the standby screen.

The user may input a speech, for example, "john smith", in a state in which the region for the call icon 1211 is extendedly displayed. Referring to a screen [1202] of FIG. 12, the electronic device may operate to display a signal indicator 1230 notifying that the user is inputting the speech. Then, the electronic device may recognize the speech "john smith", convert the speech recognized "john smith" into a text, and display the converted text on the standby screen. Next, if a search for "john smith" is made in the contact address list, the electronic device may process the speech command through attempting a call connection to "john smith". In this case, as illustrated in a screen [1203] of FIG. 12, the electronic device may display text information 1240 indicating that the speech command is being processed on the specific domain (e.g., call domain) on the screen.

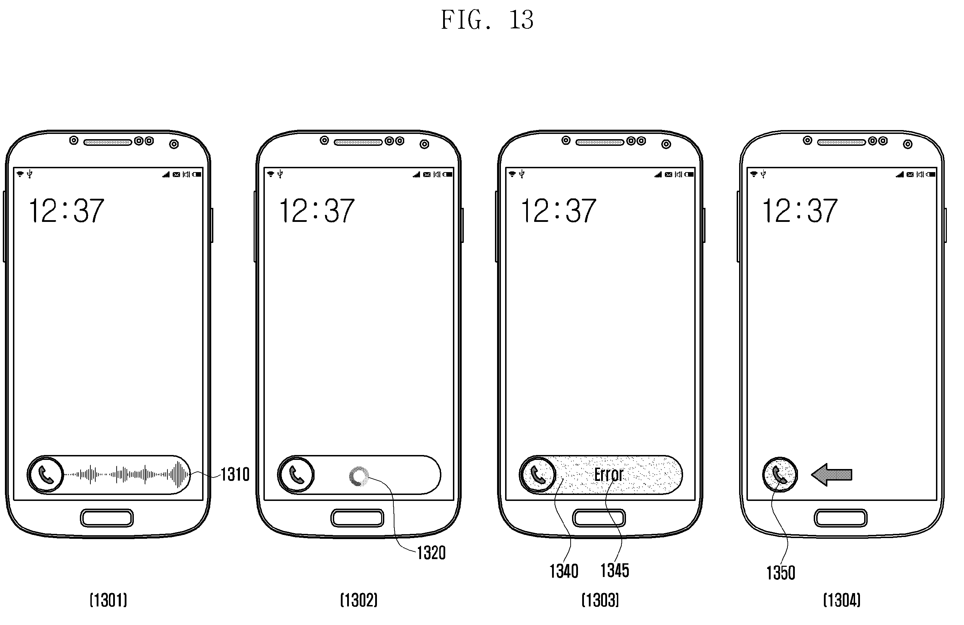

FIG. 13 is a diagram of a screen for reporting speech recognition failure according to various embodiments of the present disclosure.

Referring to FIG. 13, the electronic device may support to provide information according to the activation operation of the speech recognition module. As illustrated in a screen [1301] of FIG. 13, if a speech signal is being input from the microphone, the electronic device may provide information 1310 indicating that the speech signal is being input. As illustrated in a screen [1302] of FIG. 13, the electronic device may provide information 1320 indicating that the speech recognition is being performed with respect to the input speech signal. If the speech recognition fails due to a network problem or unrecognizable speech input, as illustrated in a screen [1303] of FIG. 13, the electronic device may change the color of the call icon that includes an extension region 1340 or display a message (error) 1345 related to the recognition failure on the extension region in order to provide the recognition failure to the user. After displaying the error message, as illustrated in a screen [1304] of FIG. 13, the electronic device may reduce the extension region of the call icon, and display only the call icon 1350 of which the color has been changed. Once a predetermined time elapses, the electronic device may restore the color of the call icon or the extension region to the previous color. The orders of the extension region reduction and the color recovering process may be changed.

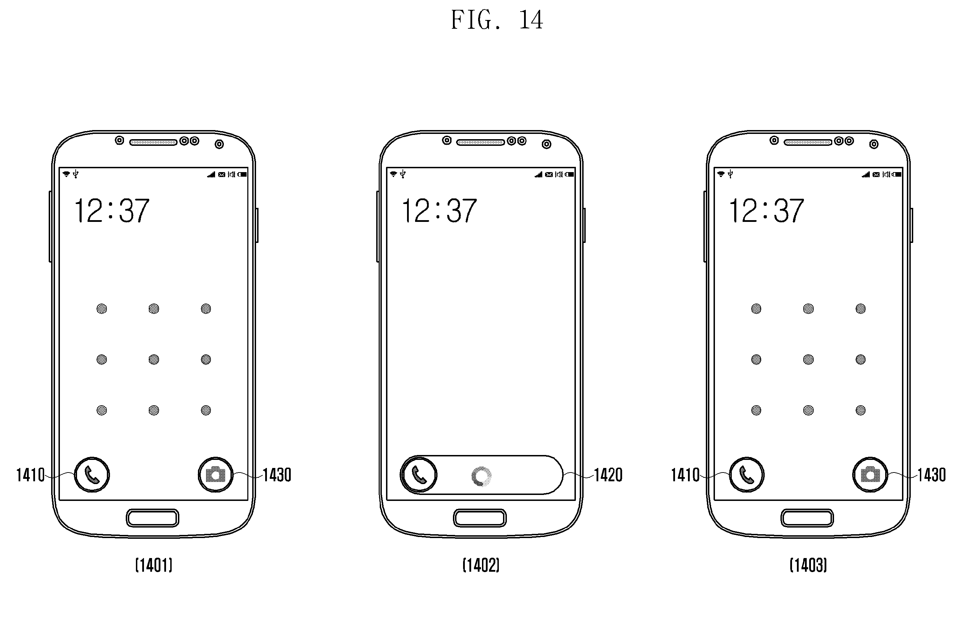

FIG. 14 is a diagram explaining a method for executing a function using speech recognition of an electronic device when locking is set according to various embodiments of the present disclosure.

Referring to FIG. 14, the electronic device may operate in a locking state. If a short press input (press input within a predetermined time) for the power key is detected in the locking state, the electronic device may control a general function, that is, may control the screen to be turned on to display a locking screen. As an example, although the locking screen may include a camera icon 1430 and a call icon 1410, as illustrated in screen [1401] of FIG. 14, the camera function is limitedly performed only to take a picture in the locking state, and the call function is limitedly performed only to make an emergency call (e.g., "911", "119" or "112").

The user may perform a short press input or a long press input on the call icon 1410 that is displayed on the locking screen. The electronic device may trigger a call application corresponding to the short press input. However, since the screen is in the locking state, the electronic device may request to release the locking before executing the call application. To correspond to the long press input, the electronic device may switch to a state in which it can receive the speech through the microphone, and may be on standby for processing of the speech command through limitation to the call connection domain. If the speech information is input, as illustrated in a screen [1402] of FIG. 14, the electronic device may provide information 1420 indicating that the speech recognition is being performed with respect to the input speech information on the screen.

In this case, the electronic device may confirm the locking state, and process the speech command limitedly with respect to the speech input. For example, in the electronic device, the contact address of "john smith" may be set not to allow a private access thereof. If the speech input of "john smith" is received in the locking state, the electronic device may confirm (search for) "john smith" from the contact address list. In this case, since the "john smith" is set not to allow the private access thereof, the electronic device may determine that the call connection to "john smith" is limited, and may not process the speech command. In this case, as illustrated in a screen [1403] of FIG. 14, the electronic device may display a lock screen for notifying the user that the speech command has failed.

According to another embodiment, if a name or a number to which a call is allowed is received in the locking state, the electronic device may process to attempt the call connection corresponding to the speech information. For example, if the speech "119" or "911" is input after the long press is input with respect to the call icon 1410 on the locking screen, the electronic device may process to execute a call connection to the number "119" or "911" regardless of security. In this case, although the electronic device has executed the call connection regardless of the security, it may operate to display the locking screen again after the call function is completed.

According to another embodiment, if a long press input is detected with respect to the camera icon 1430 in the screen locking state, the electronic device may operate to execute the speech command through limitation to the camera function domain, and if an input for completion of the camera function occurs, the electronic device may operate to return to the locking screen.

As described above, the electronic device according to embodiments of the present disclosure operates to execute the corresponding function only in the case where the speech information satisfies the designated condition in the locking state. Further, if the corresponding function is completed, the electronic device may return to the locking state. Through this, the embodiments of the present disclosure can maintain (improve) the security.

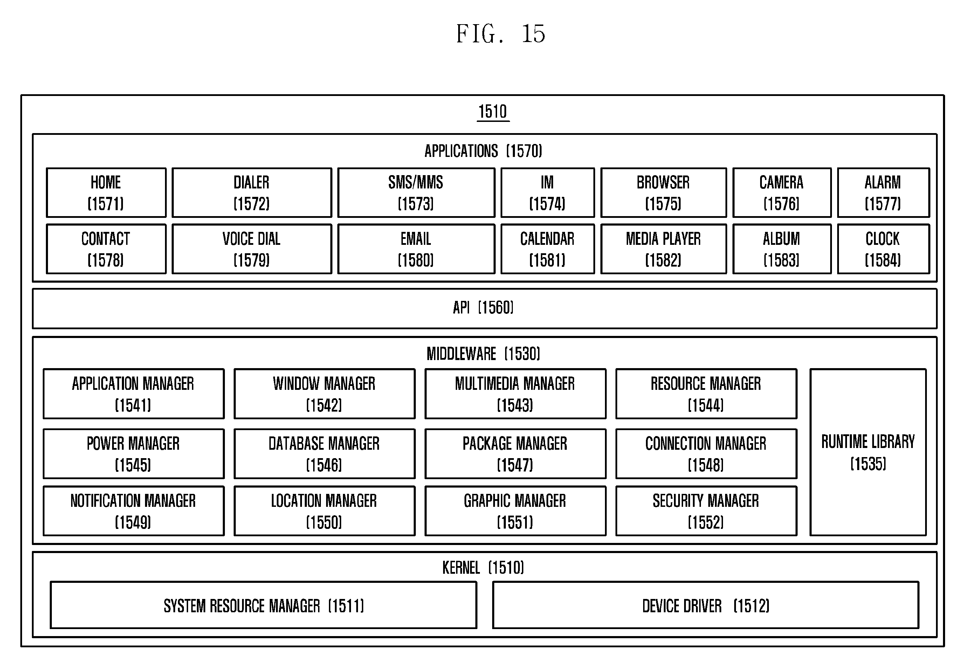

FIG. 15 is a block diagram illustrating a configuration of a programming module according to various embodiments of the present disclosure.

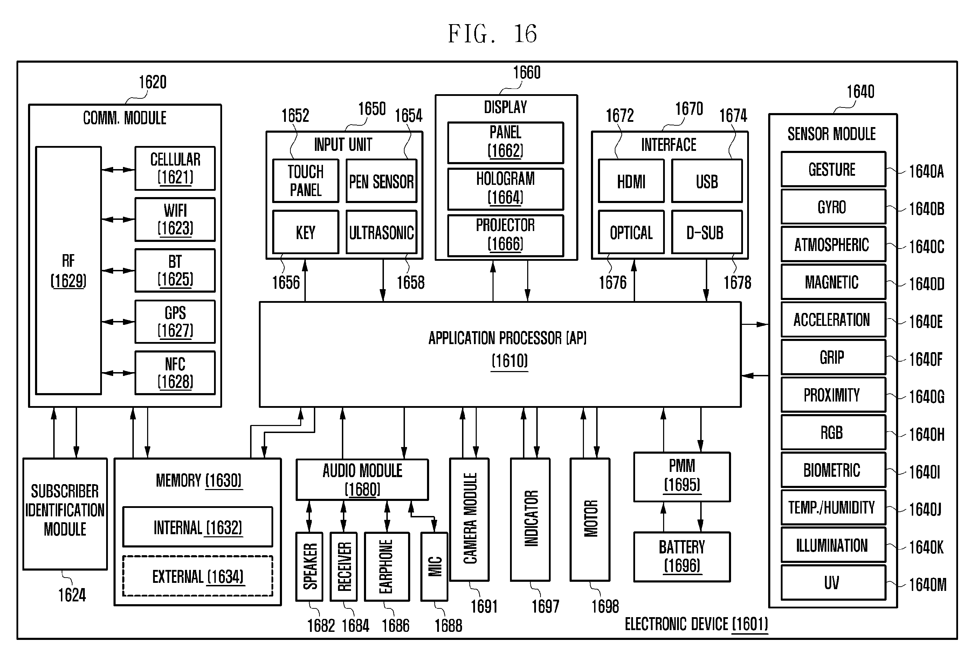

The programming module 1510 may be included (or stored) in the electronic device 101 (e.g., the memory 130 shown in FIG. 1) or may be included (or stored) in the electronic device 1601 (e.g., the memory 1630 shown in FIG. 16). At least a part of the programming module 1510 may be implemented in software, firmware, hardware, or a combination of two or more thereof. The programming module 1510 may be implemented in hardware, and may include an operating system (OS) controlling resources related to an electronic device (e.g., the electronic device 101) and/or various applications executed in the OS. For example, the OS may be Android^{™}, iOS^{™}, Windows^{™}, Symbian^{®} Tizen^{®}, Bada^{®}, and the like.

Referring to FIG. 15, the programming module 1510 may include a kernel 1520, a middleware 1530, an API 1560, and/or the application 1570.

The kernel 1510 (e.g., the kernel 141 shown in FIG. 1) may include a system resource manager 1511 and/or a device driver 1512. The system resource manager 1544 may include, for example, a process manager (not illustrated), a memory manager (not illustrated), and a file system manager (not illustrated). The system resource manager 1511 may perform the control, allocation, recovery, and/or the like of system resources. The device driver 1512 may include, for example, a display driver (not illustrated), a camera driver (not illustrated), a BT driver (not illustrated), a shared memory driver (not illustrated), a universal serial bus (USB) driver (not illustrated), a keypad driver (not illustrated), a Wi-Fi driver (not illustrated), and/or an audio driver (not illustrated). Also, according to an embodiment of the present disclosure, the device driver 1512 may include an inter-process communication (IPC) driver (not illustrated).

The middleware 1530 may include multiple modules previously implemented so as to provide a function used in common by the applications 1570. Also, the middleware 1530 may provide a function to the applications 1570 through the API 1560 in order to enable the applications 1570 to efficiently use limited system resources within the electronic device. For example, as illustrated in FIG. 3, the middleware 1530 (e.g., the middleware 143 shown in FIG. 1) may include at least one of a runtime library 1535, an application manager 1541, a window manager 1542, a multimedia manager 1543, a resource manager 1544, a power manager 1545, a database manager 1546, a package manager 1547, a connectivity manager 1548, a notification manager 1549, a location manager 1550, a graphic manager 1551, a security manager 1552, and any other suitable and/or similar manager.

The runtime library 1535 may include, for example, a library module used by a complier, in order to add a new function by using a programming language during the execution of the application 1570. According to an embodiment of the present disclosure, the runtime library 1535 may perform functions which are related to input and output, the management of a memory, an arithmetic function, and/or the like.

The application manager 1541 may manage, for example, a life cycle of at least one of the applications 1570. The window manager 1542 may manage graphical user interface (GUI) resources used on the screen. The multimedia manager 1543 may detect a format used to reproduce various media files and may encode or decode a media file through a codec appropriate for the relevant format. The resource manager 1544 may manage resources, such as a source code, a memory, a storage space, and/or the like of at least one of the applications 1570.

The power manager 1545 may operate together with a basic input/output system (BIOS), may manage a battery or power, and may provide power information and the like used for an operation. The database manager 1546 may manage a database in such a manner as to enable the generation, search and/or change of the database to be used by at least one of the applications 1570. The package manager 1547 may manage the installation and/or update of an application distributed in the form of a package file.

The connectivity or connection manager 1548 may manage a wireless connectivity such as, for example, Wi-Fi and BT. The notification manager 1549 may display or report, to the user, an event such as an arrival message, an appointment, a proximity alarm, and the like in such a manner as not to disturb the user. The location manager 1550 may manage location information of the electronic device. The graphic manager 1551 may manage a graphic effect, which is to be provided to the user, and/or a user interface related to the graphic effect. The security manager 1552 may provide various security functions used for system security, user authentication, and the like. According to an embodiment of the present disclosure, when the electronic device (e.g., the electronic device 101 shown in FIG. 1) has a telephone function, the middleware 1530 may further include a telephony manager (not illustrated) for managing a voice telephony call function and/or a video telephony call function of the electronic device.

The middleware 1530 may generate and use a new middleware module through various functional combinations of the above-described internal element modules. The middleware 1530 may provide modules specialized according to types of OSs in order to provide differentiated functions. Also, the middleware 1530 may dynamically delete some of the existing elements, or may add new elements. Accordingly, the middleware 1530 may omit some of the elements described in the various embodiments of the present disclosure, may further include other elements, or may replace the some of the elements with elements, each of which performs a similar function and has a different name.

The API 1560 (e.g., the API 145 in FIG. 1) is a set of API programming functions, and may be provided with a different configuration according to an OS. In the case of Android or iOS, for example, one API set may be provided to each platform. In the case of Tizen, for example, two or more API sets may be provided to each platform.

The applications 1570 (e.g., the applications 147 shown in FIG. 1) may include, for example, a preloaded application and/or a third party application. The applications 1570 (e.g., the applications 147) may include, for example, a home application 1571, a dialer application 1572, a short message service (SMS)/multimedia message service (MMS) application 1573, an instant message (IM) application 1574, a browser application 1575, a camera application 1576, an alarm application 1577, a contact application 1578, a voice dial application 1579, an electronic mail (e-mail) application 1580, a calendar application 1581, a media player application 1582, an album application 1583, a clock application 1584, and any other suitable and/or similar application.

At least a part of the programming module 1510 may be implemented by instructions stored in a non-transitory computer-readable storage medium. When the instructions are executed by one or more processors, the one or more processors may perform functions corresponding to the instructions. The non-transitory computer-readable storage medium may be, for example, the memory 1630 (shown in Fig. 16). At least a part of the programming module 1510 may be implemented (e.g., executed) by, for example, the one or more processors 1610. At least a part of the programming module 1510 may include, for example, a module, a program, a routine, a set of instructions, and/or a process for performing one or more functions.

FIG. 16 is a block diagram illustrating an electronic device 1601 according to various embodiments of the present disclosure. The electronic device 1601 may form, for example, the whole or part of the electronic device 101 shown in FIG. 1.

Referring to FIG. 16, the electronic device 1601 may include at least one application processor (AP) 1610, a communication module 1620, a subscriber identification module (SIM) card 1624, a memory 1630, a sensor module 1640, an input unit 1650, a display 1660, an interface 1670, an audio module 1680, a camera module 1691, a power management module (PMM) 1695, a battery 1696, an indicator 1697, and a motor 1698.

The AP 1610 may drive an operating system or applications, control a plurality of hardware or software components connected thereto, and also perform processing and operation for various data including multimedia data. The AP 1610 may be formed of system-on-chip (SoC), for example. According to an embodiment of the present disclosure, the AP 1610 may further include a graphics processing unit (GPU) (not shown).

The communication module 1620 (e.g., the communication interface 160 shown in FIG. 1) may perform a data communication with any other electronic device (e.g., the electronic device 104 or the server 106, shown in FIG. 1) connected to the electronic device 1601 (e.g., the electronic device 101) through the network. According to an embodiment of the present disclosure, the communication module 1620 may include therein a cellular module 1621, a Wi-Fi module 1623, a BT module 1625, a GPS module 1627, an NFC module 1628, and a radio frequency (RF) module 1629.

The cellular module 1621 may offer a voice call, a video call, a message service, an internet service, or the like through a communication network (e.g., long term evolution (LTE), LTE-advanced (LTE-A), code division multiple access (CDMA), wideband CDMA (WCDMA), universal mobile telecommunications system (UMTS), wireless broadband (WiBro), or global system for mobile communications (GSM), etc.). Additionally, the cellular module 1621 may perform identification and authentication of the electronic device in the communication network, using the SIM card 1624. According to an embodiment of the present disclosure, the cellular module 1621 may perform at least part of functions the AP 1610 can provide. For example, the cellular module 1621 may perform at least part of a multimedia control function.

According to an embodiment of the present disclosure, the cellular module 1621 may include a communication processor (CP). Additionally, the cellular module 1621 may be formed of SoC, for example. Although some elements such as the cellular module 1621 (e.g., the CP), the memory 1630, or the power management module 1695 are shown as separate elements being different from the AP 1610 in FIG. 16, the AP 1610 may be formed to have at least part (e.g., the cellular module 1621) of the above elements in an embodiment.

According to an embodiment of the present disclosure, the AP 1610 or the cellular module 1621 (e.g., the CP) may load commands or data, received from a nonvolatile memory connected thereto or from at least one of the other elements, into a volatile memory to process them. Additionally, the AP 1610 or the cellular module 1621 may store data, received from or created at one or more of the other elements, in the nonvolatile memory.

Each of the Wi-Fi module 1623, the BT module 1625, the GPS module 1627 and the NFC module 1628 may include a processor for processing data transmitted or received therethrough. Although FIG. 16 shows the cellular module 1621, the Wi-Fi module 1623, the BT module 1625, the GPS module 1627 and the NFC module 1628 as different blocks, at least part of them may be contained in a single integrated circuit (IC) chip or a single IC package in an embodiment. For example, at least part (e.g., the CP corresponding to the cellular module 1621 and a Wi-Fi processor corresponding to the Wi-Fi module 1623) of respective processors corresponding to the cellular module 1621, the Wi-Fi module 1623, the BT module 1625, the GPS module 1627 and the NFC module 1628 may be formed as a single SoC.

The RF module 1629 may transmit and receive data, e.g., RF signals or any other electric signals. Although not shown, the RF module 1629 may include a transceiver, a power amp module (PAM), a frequency filter, a low noise amplifier (LNA), or the like. Also, the RF module 1629 may include any component, e.g., a wire or a conductor, for transmission of electromagnetic waves in a free air space. Although FIG. 16 shows that the cellular module 1621, the Wi-Fi module 1623, the BT module 1625, the GPS module 1627 and the NFC module 1628 share the RF module 1629, at least one of them may perform transmission and reception of RF signals through a separate RF module in an embodiment.

The SIM card 1624_1 to 1624_N may be a specific card formed of SIM and may be inserted into a slot 1625_1 to 1625_N formed at a certain place of the electronic device. The SIM card 1624_1 to 1624_N may contain therein an integrated circuit card identifier (ICCID) or an international mobile subscriber identity (IMSI).

The memory 1630 (e.g., the memory 130) may include an internal memory 1632 and an external memory 1634. The internal memory 1632 may include, for example, at least one of a volatile memory (e.g., dynamic random access memory (DRAM), static RAM (SRAM), synchronous DRAM (SDRAM), etc.) or a nonvolatile memory (e.g., one time programmable read only memory (OTPROM), programmable (PROM), erasable and programmable (EPROM), electrically erasable and programmable (EEPROM), mask ROM, flash ROM, NAND flash memory, NOR flash memory, etc.).

According to an embodiment of the present disclosure, the internal memory 1632 may have the form of a solid state drive (SSD). The external memory 1634 may include a flash drive, e.g., compact flash (CF), secure digital (SD), micro-SD, mini-SD, extreme digital (xD), memory stick, or the like. The external memory 1634 may be functionally connected to the electronic device 1601 through various interfaces. According to an embodiment, the electronic device 1601 may further include a storage device or medium such as a hard drive.

The sensor module 1640 may measure physical quantity or sense an operating status of the electronic device 1601, and then convert measured or sensed information into electric signals. The sensor module 1640 may include, for example, at least one of a gesture sensor 1640A, a gyro sensor 1640B, an atmospheric sensor 1640C, a magnetic sensor 1640D, an acceleration sensor 1640E, a grip sensor 1640F, a proximity sensor 1640G, a color sensor 1640H (e.g., red, green, blue (RGB) sensor), a biometric sensor 1640I, a temperature/humidity sensor 1640J, an illumination sensor 1640K, and an ultraviolet (UV) sensor 1640M. Additionally or alternatively, the sensor module 1640 may include, e.g., an olfactory sensor or electric (E-nose) sensor (not shown), an electromyography (EMG) sensor (not shown), an electroencephalogram (EEG) sensor (not shown), an electrocardiogram (ECG) sensor (not shown), an infrared (IR) sensor (not shown), an iris scan sensor (not shown), or a finger scan sensor (not shown). Also, the sensor module 1640 may include a control circuit for controlling one or more sensors equipped therein.

The input unit 1650 may include a touch panel 1652, a digital stylus or digital pen sensor 1654, a key 1656, or an ultrasonic input unit 1658. The touch panel 1652 may recognize a touch input in a manner of capacitive type, resistive type, infrared type, or ultrasonic type. Also, the touch panel 1652 may further include a control circuit. In case of a capacitive type, a physical contact or proximity may be recognized. The touch panel 1652 may further include a tactile layer. In this case, the touch panel 1652 may offer a tactile feedback to a user.

The digital stylus or digital pen sensor 1654 may be formed in the same or similar manner as receiving a touch input or by using a separate recognition sheet. The key 1656 may include, for example, a physical button, an optical key, or a keypad. The ultrasonic input unit 1658 is a specific device capable of identifying data by sensing sound waves with a microphone 1688 in the electronic device 1601 through an input tool that generates ultrasonic signals, thus allowing wireless recognition. According to an embodiment, the electronic device 1601 may receive a user input from any external device (e.g., a computer or a server) connected thereto through the communication module 1620.

The display 1660 (e.g., the display 160 shown in FIG. 1) may include a panel 1662, a hologram 1664, or a projector 1666. The panel 1662 may be, for example, liquid crystal display (LCD), active matrix organic light emitting diode (AM-OLED) or plastic OLED (POLED), or the like. The panel 1662 may have a flexible, transparent or wearable form. The panel 1662 may be formed of a single module with the touch panel 1652. The hologram 1664 may show a stereoscopic image in the air using interference of light. The projector 1666 may project an image onto a screen, which may be located at the inside or outside of the electronic device 1601. According to an embodiment, the display 1660 may further include a control circuit for controlling the panel 1662, the hologram 1664, and the projector 1666.

The interface 1670 may include, for example, a high-definition multimedia interface (HDMI) 1672, a USB 1674, an optical interface 1676, or a D-subminiature (D-sub) 1678. The interface 1670 may be contained, for example, in the communication interface 170 shown in FIG. 1. Additionally or alternatively, the interface 1670 may include, for example, a mobile high-definition link) interface, an SD card/multi-media card (MMC) interface, or an infrared data association (IrDA) interface.

The audio module 1680 may perform a conversion between sounds and electric signals. At least part of the audio module 1680 may be contained, for example, in the input/output interface 150 shown in FIG. 1. The audio module 1680 may process sound information inputted or outputted through a speaker 1682, a receiver 1684, an earphone 1686, or a microphone 1688.

The camera module 1691 is a device capable of obtaining still images and moving images. According to an embodiment, the camera module 1691 may include at least one image sensor (e.g., a front sensor or a rear sensor), a lens (not shown), an image signal processor (ISP), (not shown), or a flash (e.g., LED or xenon lamp, not shown).

The power management module 1695 may manage electric power of the electronic device 1601. Although not shown, the power management module 1695 may include, for example, a power management IC (PMIC), a charger IC, or a battery or fuel gauge.

The PMIC may be formed, for example, of an IC chip or SoC. Charging may be performed in a wired or wireless manner. The charger IC may charge a battery 1696 and prevent overvoltage or overcurrent from a charger. According to an embodiment of the present disclosure, the charger IC may have a charger IC used for at least one of wired and wireless charging types. A wireless charging type may include, for example, a magnetic resonance type, a magnetic induction type, or an electromagnetic type. Any additional circuit for a wireless charging may be further used such as a coil loop, a resonance circuit, or a rectifier.

The battery gauge may measure the residual amount of the battery 1696 and a voltage, current or temperature in a charging process. The battery 1696 may store or create electric power therein and supply electric power to the electronic device 1601. The battery 1696 may be, for example, a rechargeable battery or a solar battery.

The indicator 1697 may show thereon a current status (e.g., a booting status, a message status, or a recharging status) of the electronic device 1601 or of its part (e.g., the AP 1610). The motor 1698 may convert an electric signal into a mechanical vibration. Although not shown, the electronic device 1601 may include a specific processor (e.g., GPU) for supporting a mobile TV. This processor may process media data that comply with standards of digital multimedia broadcasting (DMB), digital video broadcasting (DVB), or media flow.

Each of the above-discussed elements of the electronic device disclosed herein may be formed of one or more components, and its name may be varied according to the type of the electronic device. The electronic device disclosed herein may be formed of at least one of the above-discussed elements without some elements or with additional other elements. Some of the elements may be integrated into a single entity that still performs the same functions as those of such elements before integrated.

The term "module" used in this disclosure may refer to a certain unit that includes one of hardware, software and firmware or any combination thereof. The module may be interchangeably used with unit, logic, logical block, component, or circuit, for example. The module may be the minimum unit, or part thereof, which performs one or more particular functions. The module may be formed mechanically or electronically. For example, the module disclosed herein may include at least one of application-specific IC (ASIC) chip, field-programmable gate arrays (FPGAs), and programmable-logic device, which have been known or are to be developed.

The term "module" used in the present disclosure may refer to, for example, a unit including one or more combinations of hardware, software, and firmware. The "module" may be interchangeable with a term, such as "unit," "logic," "logical block," "component," "circuit," or the like. The "module" may be a minimum unit of a component formed as one body or a part thereof. The "module" may be a minimum unit for performing one or more functions or a part thereof. The "module" may be implemented mechanically or electronically. For example, the "module" according to an embodiment of the present disclosure may include at least one of an ASIC chip, an FPGA, and a programmable-logic device for performing certain operations which have been known or are to be developed in the future.

Examples of computer-readable media include: magnetic media, such as hard disks, floppy disks, and magnetic tape; optical media such as compact disc ROM (CD-ROM) disks and DVD; magneto-optical media, such as floptical disks; and hardware devices that are specially configured to store and perform program instructions (e.g., programming modules), such as ROM, RAM, flash memory, etc. Examples of program instructions include machine code instructions created by assembly languages, such as a compiler, and code instructions created by a high-level programming language executable in computers using an interpreter, etc. The described hardware devices may be configured to act as one or more software modules in order to perform the operations and methods described above, or vice versa.

Modules or programming modules according to the embodiments of the present disclosure may include one or more components, remove part of them described above, or include new components. The operations performed by modules, programming modules, or the other components, according to the present disclosure, may be executed in serial, parallel, repetitive or heuristic fashion. Part of the operations can be executed in any other order, skipped, or executed with additional operations.

According to various embodiments of the present disclosure, there is provided a storage medium storing instructions that cause, when executed, at least one processor to carry out one or more operations. The instructions may cause the processor to select a wireless power transfer scheme, to change the frequency of a signal in conformance with the wireless power transfer scheme, to change the duty cycle of the signal in conformance with the wireless power transfer scheme, and to transmit power with the frequency and duty cycle to an external electronic device.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device comprising:
a housing having a first surface and a second surface that is directed toward an opposite direction to the first surface;
a microphone arranged to receive sound from an external source;
at least one input device arranged on the housing;
a touch screen display arranged on the first surface of the housing;
a processor electrically connected to the microphone, the at least one input device, and the display; and
a memory electrically connected to the processor,
wherein the memory stores a first software program that can be triggered in response to a first user input, and
wherein the memory stores instructions which, when executed by the processor, configures the processor to control for:
receiving a second user input that is different from the first user input through at least one of the at least one input device and a selected region on the display,
switching the electronic device to a state in which the electronic device can receive a speech through the microphone in response to the second user input,
receiving the speech from the external source through the microphone, and
executing the first software program using at least a part of the received speech without receiving the first user input,
wherein the first software program comprises at least one of an application program and software programs for performing selected speech commands.

2. The electronic device of claim 1, wherein the memory stores a second software program that can be triggered in response to a third user input, and the instructions, when executed by the processor, further configures the processor to control for:
receiving a fourth user input that is different from the first input, the second input, or the third user input through at least one of the at least one input device and the selected region on the display,
switching the electronic device to a state in which the electronic device can receive the speech through the microphone in response to the fourth user input,
receiving the speech from the external source through the microphone in the state, and
executing the second software program using at least a part of the received speech without receiving the third user input.

3. The electronic device of claim 1, wherein the instructions, when executed by the processor, further configures the processor to control for:
converting the received speech into a text,
extracting at least one of data and a command related to the first software program using the converted text, and
executing a selected function on the basis of at least one of the extracted data and command.

4. The electronic device of claim 3, wherein the instructions, when executed by the processor, further configures the processor to control for not using the converted text for other software programs excluding the first software program after executing the selected function.

5. The electronic device of claim 1, wherein the instructions, when executed by the processor, further configures the processor to control for:
switching the electronic device to a state in which the electronic device can receive the speech through the microphone in response to the second user input, and
displaying indication that indicates the first software program on the display.

6. The electronic device of claim 1, wherein the instructions, when executed by the processor, further configures the processor to control for:
receiving the speech through the microphone only in a state where the second user input is continuously maintained, and
interrupting reception of the speech through the microphone if the second user input is ended,
wherein the input device includes a button arranged on the housing, and the second user input includes an operation of pressing the button.

7. The electronic device of claim 1, wherein the instructions, when executed by the processor, further configures the processor to control for:
converting the received speech into a text, and
displaying the text on the display after the reception of the speech is ended.

8. The electronic device of claim 1, wherein the instructions, when executed by the processor, further configures the processor to control for:
converting the received speech into a text,
displaying a user interface of the first software program on the display while the speech is received or after the reception of the speech is ended, and
displaying at least a part of the converted text on a part of the user interface.

9. The electronic device of claim 1,
wherein the first software program includes a phone application program,
wherein the instructions, when executed by the processor, further configures the processor to control for displaying an icon that indicates the phone application on the display, and
wherein the first user input includes a touch input of the icon,
wherein the input device includes a physical button or a touch key, and the second user input includes an operation of pressing or touching the physical button or the touch key.

10. The electronic device of claim 11, wherein the instructions, when executed by the processor, further configures the processor to control for:
displaying a lock screen on the display after the display is switched from a turn-off state to a turn-on state, and
switching the microphone to a state where the microphone can receive the speech in response to the second user input in a state where the lock screen is displayed.

11. The electronic device of claim 10,
wherein the lock screen includes an icon that indicates the phone application,
wherein the first user input includes an operation of touching the icon for at least a first time, and
wherein the second user input includes an operation of touching or pressing the icon for a second time that is longer than the first time.

12. The electronic device of claim 1, wherein the processor is further configured to control for processing the received speech through execution of a selected function based on at least one of an operation state of the electronic device and a type of the second user input.

13. The electronic device of claim 1, wherein, if the processor can process a speech command for a plurality of functions with respect to the received speech, the processor is further configured to control for:
displaying notification information for the plurality of functions on the display, and
processing the speech command through limitation to a function selected by a user from the notification information.

14. The electronic device of claim 1, wherein the processor is further configured to control for:
determining whether the electronic device is in a locking state corresponding to the second user input,
executing only an access allowed function if the electronic device is in the locking state, and
returning to the locking state if the access allowed function is ended.

15. The electronic device of claim 1, wherein the second user input comprises at least one of a hard key or soft key input, a gesture input, and an input received from an external device.
